# FASCICULE DE BREVET EUROPEEN

(11) **EP 3 862 610 B1**
(45) Date de publication et mention de la délivrance du brevet: **19.10.2022**
(21) Numéro de dépôt: 21155412.6
(22) Date de dépôt: 05.02.2021
(51) Int. Cl.: F16L 37/24, F16L 37/248, F16L 37/32, F16L 37/34, F16L 37/35, F16L 37/36

(54) **RACCORD FLUIDIQUE**
FLUIDKUPPLUNG
FLUID COUPLING

(30) Priorité: 07.02.2020 FR 2001215
(43) Date de publication de la demande: 11.08.2021
(73) Titulaire: Staubli Faverges, 74210 Faverges-Seythenex (FR)
(72) Inventeur: TIBERGHIEN, Alain-Christophe, 74320 Sevrier (FR); DURIEUX, Christophe, 73200 Gilly sur Isère (FR); MICHEL, François, 73200 Albertville (FR)
(74) Mandataire: Lavoix

(56) Documents cités:
- EP-A1- 0 278 420
- WO-A1-2016/091324
- GB-A- 691 568
- US-A- 5 975 491

## Description

La présente invention concerne un raccord fluidique.

GB 691 568 décrit un raccord dans lequel un élément femelle comporte un corps femelle, un piston formant une valve mobile longitudinalement et une bague tournante par rapport au corps femelle. Le piston est en liaison hélicoïdale avec le corps femelle, c'est-à-dire mobile en rotation par rapport au corps femelle via des rouleaux et une rainure hélicoïdale, et solidaire en rotation de la bague tournante et en liaison glissière par rapport à celle-ci. Lors de l'accouplement du raccord, le piston est déplacé vers sa position ouverte par la bague tournante entraînée en rotation par le corps mâle du raccord, sous l'effet d'une liaison hélicoïdale entre le corps femelle et le piston, et le corps femelle s'engage dans une rainure avec portion circonférentielle du corps mâle pour la solidarisation axiale des corps mâle et femelle.

Dans ce raccord, toute torsion entre les canalisations rattachées aux deux éléments de raccord en configuration accouplée peut provoquer la déconnexion du raccord.

De plus, les joints d'étanchéité utilisés dans ce raccord sont des joints toriques élastomères (« *packing ring 30 of rubber or like flexible and résilient material* ») qui sont facilement déformables et ne conviennent pas à certaines applications, notamment les applications cryogéniques.

Les documents US 5975491A, EP 0278420A1 et WO 2016/091324 A1 divulguent également des raccords fluidiques pertinents pour l'invention.

L'objectif de l'invention est de limiter les risques d'ouverture et de fermeture intempestives du piston, dans un raccord adapté notamment à la cryogénie.

A cet effet, l'invention concerne un raccord fluidique comprenant un élément mâle et un élément femelle aptes à s'emmancher l'un avec l'autre selon un axe central longitudinal du raccord, l'élément mâle ayant un corps mâle formant au moins une rainure d'accouplement, cette rainure d'accouplement comprenant une portion d'entrée longitudinale qui débouche sur un côté avant de l'élément mâle, et une portion circonférentielle, l'élément femelle comprenant :
- un corps femelle formant un volume d'accueil du corps mâle, et comprenant au moins un pion d'accouplement s'étendant dans le volume d'accueil, et apte à coopérer avec la portion circonférentielle de la rainure d'accouplement dans une configuration accouplée du raccord, le corps femelle comprenant également au moins une rainure de guidage comprenant une portion inclinée par rapport à une direction circonférentielle et par rapport à une direction longitudinale,
- un piston comprenant au moins un pion de guidage faisant saillie radialement du piston, le pion de guidage étant engagé dans la rainure de guidage,
- une bague interposée radialement entre le piston et le corps femelle et délimitant un canal interne de l'élément femelle, le piston étant bloqué en rotation par rapport à la bague mais monté avec possibilité de coulissement longitudinal par rapport à la bague entre une position de fermeture du canal interne, dans laquelle le piston et la bague coopèrent de manière étanche, et une position d'ouverture du canal interne,

le raccord comprenant un joint d'étanchéité interposé radialement entre la bague et le corps mâle dans la configuration accouplée du raccord,
entre une configuration désaccouplée du raccord et la configuration accouplée, la bague est déplacée en rotation par rapport au corps femelle autour de l'axe longitudinal du raccord selon un sens d'accouplement et la bague est maintenue longitudinalement dans le corps femelle, et le piston est déplacé longitudinalement de sa position de fermeture à sa position d'ouverture.

Ce raccord est caractérisé en ce que le corps mâle comprend un corps externe mâle et un corps interne mâle, le corps interne mâle délimitant un conduit interne de l'élément mâle, le corps externe mâle portant la rainure d'accouplement,
en ce que, en cours d'accouplement, le corps externe mâle et la bague sont solidarisés en rotation autour de l'axe central longitudinal,
en ce que, en configuration accouplée, le corps externe mâle et la bague sont solidaires en rotation autour de l'axe central longitudinal
en ce que, pendant l'accouplement et en configuration accouplée, le corps externe mâle et le corps interne mâle sont libres en rotation l'un par rapport à l'autre autour de l'axe longitudinal mais dépourvus de mobilité en translation l'un par rapport à l'autre le long de l'axe longitudinal,
en ce que l'élément femelle comprend au moins un organe de blocage mobile dans le corps femelle, en configuration accouplée du raccord, entre une position de blocage, dans laquelle l'organe de blocage empêche la rotation de la bague par rapport au corps femelle autour de l'axe longitudinal selon un sens de désaccouplement, et une position de libération, dans laquelle l'organe de blocage n'empêche pas la rotation de la bague selon le sens de désaccouplement, et
en ce qu'en configuration désaccouplée, l'organe de blocage n'empêche pas la rotation de la bague selon le sens d'accouplement.

Grâce à l'invention, le raccord peut être verrouillé en configuration accouplée tout en limitant les risques liés aux torsions des canalisations reliées au raccord.

Selon des aspects avantageux mais non obligatoires de l'invention, un tel raccord peut incorporer une ou plusieurs des caractéristiques suivantes, prises selon toute combinaison techniquement admissible :
- La rainure d'accouplement comprend une portion intermédiaire inclinée selon une direction circonférentielle et une direction longitudinale, située entre la portion circonférentielle et la portion d'entrée longitudinale de la rainure d'accouplement, la rainure de guidage comprend une portion circonférentielle qui débouche dans la portion inclinée de la rainure de guidage et, en cours d'accouplement, la course angulaire autour de l'axe longitudinal du pion de guidage dans la portion circonférentielle correspond à la course angulaire autour de l'axe longitudinal du pion d'accouplement dans la portion intermédiaire inclinée de la rainure d'accouplement et au mouvement de la bague par rapport au corps mâle d'une première position longitudinale, où la bague et le corps mâle ne coopèrent pas de manière étanche, à une deuxième position longitudinale, où la bague et le corps mâle coopèrent de manière étanche par l'intermédiaire du joint d'étanchéité.
- Le corps mâle comporte au moins une couronne de billes interposées entre le corps interne mâle et le corps externe mâle pour la liberté en rotation relative des corps interne mâle et corps externe mâle autour de l'axe central longitudinal.
- Le joint d'étanchéité comporte un corps polymère en forme de U et un renfort monté radialement entre les deux branches de la forme en U, la forme en U étant ouverte vers l'arrière de l'élément de raccord parmi l'élément mâle ou femelle dans lequel le joint est logé.
- Le pion d'accouplement s'étend en arrière d'une face avant de la bague, le pion d'accouplement s'étendant de préférence en retrait de la face avant de la bague d'une distance longitudinale supérieure à 0,6 fois un diamètre interne du corps femelle délimitant le volume d'accueil du corps mâle dans l'élément femelle.
- La bague comporte un pion d'entrainement disposé en retrait d'une face avant de la bague, ce pion d'entraînement étant engagé dans la rainure d'accouplement pour la solidarisation du corps externe mâle avec la bague en rotation autour de l'axe central longitudinal en cours d'accouplement et en configuration accouplée, le joint d'étanchéité est logé dans le corps mâle et coopère avec une surface radiale externe de la bague en configuration accouplée et une distance longitudinale entre le pion d'entraînement et une extrémité avant de la surface radiale externe de la bague est inférieure à une distance longitudinale entre le joint d'étanchéité et une face avant du corps externe mâle.
- En configuration désaccouplée du raccord, le ou chaque organe de blocage est en position de libération, et la position de libération est une position stable.
- L'organe de blocage est disposé dans une rainure orthoradiale du corps femelle, traversant le corps femelle de part en part, et le corps femelle comprend un organe de manœuvre disposé à l'extérieur du corps femelle pour la commande du mouvement de l'organe de blocage de la position de blocage à la position de libération.
- Le ou chaque organe de blocage est solidaire du corps femelle en rotation autour de l'axe longitudinal, le ou chaque organe de blocage est en contact, en position de blocage, avec un méplat de la bague qui est ménagé en creux à partir d'une surface radiale externe de la bague, et en position de libération, le ou chaque organe de blocage est entièrement disposé à l'extérieur d'un volume cylindrique délimité autour de l'axe longitudinal par cette surface radiale externe.
- L'organe de blocage est une tige qui comprend une encoche formée en creux dans une surface externe de la tige et la tige est mobile en rotation par rapport au corps femelle, autour d'un axe incliné par rapport à une direction longitudinale, entre la position de libération dans laquelle l'encoche est en regard de la bague et n'interfère pas avec la rotation de la bague, et la position de blocage, dans laquelle la surface externe de la tige est en contact avec le méplat de la bague.
- L'organe de blocage est solidaire d'un organe de manœuvre formé par un levier, mobile en rotation par rapport au corps femelle entre la position de libération et la position de blocage de l'organe de blocage et comprenant deux flasques disposés en chape autour du corps femelle.
- Le corps femelle forme un épaulement longitudinal externe coopérant avec un épaulement interne du levier en position de blocage pour freiner le mouvement du levier vers la position de libération de l'organe de blocage.
- L'élément mâle comprend une soupape repoussée par un ressort vers une position de fermeture du conduit interne de l'élément mâle, en cours d'accouplement, cette soupape est déplacée par le piston vers une position d'ouverture du conduit interne de l'élément mâle, et une encoche terminale de la rainure de guidage, dans laquelle le pion de guidage est engagé en configuration accouplée, est configurée de manière que le mouvement du piston présente une sur-course longitudinale entre sa position d'ouverture en configuration accouplée et sa position de fermeture.
- Le pion de guidage traverse radialement une rainure longitudinale de la bague au niveau de laquelle le pion de guidage et la bague coopèrent pour le coulissement longitudinal de la bague par rapport au piston, cette rainure longitudinale débouchant sur l'arrière de la bague.
- Le corps externe mâle comporte des surfaces radiales internes qui sont étagées, et la bague comporte des surfaces radiales externes qui sont étagées de manière qu'en cours d'accouplement, les surfaces radiales externes étagées et les surfaces radiales internes étagées coopèrent deux à deux.

L'invention sera mieux comprise et d'autres avantages de celle-ci apparaîtront plus clairement à la lumière de la description qui va suivre d'un raccord conforme à son principe, faite à titre d'exemple non limitatif en référence aux dessins annexés dans lesquels :
[Fig 1] La figure 1 est une vue en perspective d'un élément mâle d'un raccord conforme à l'invention ;
[Fig 2] La figure 2 est une coupe longitudinale de l'élément mâle de la figure 1 ;

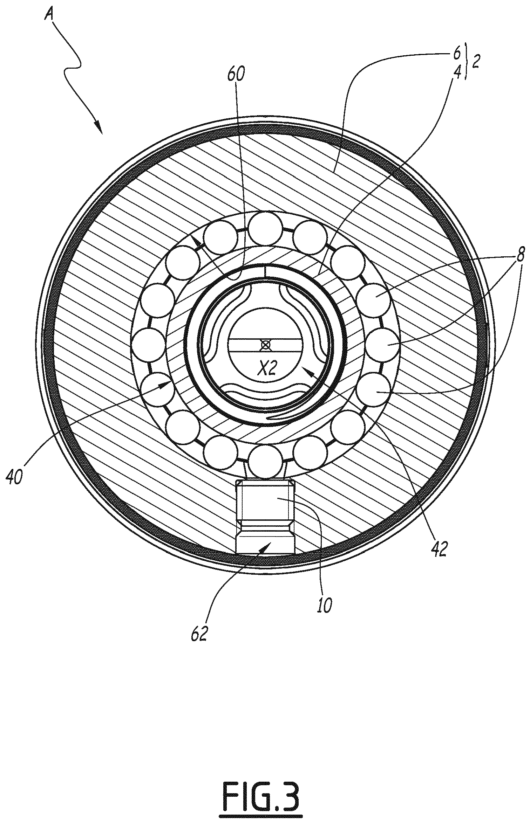

[Fig 3] La figure 3 est une coupe de l'élément mâle selon le plan III-III à la figure 2 ;
[Fig 4] La figure 4 est une vue en perspective d'un élément femelle du raccord conforme à l'invention ;
[Fig 5] La figure 5 est une coupe longitudinale de l'élément femelle de la figure 4 ;

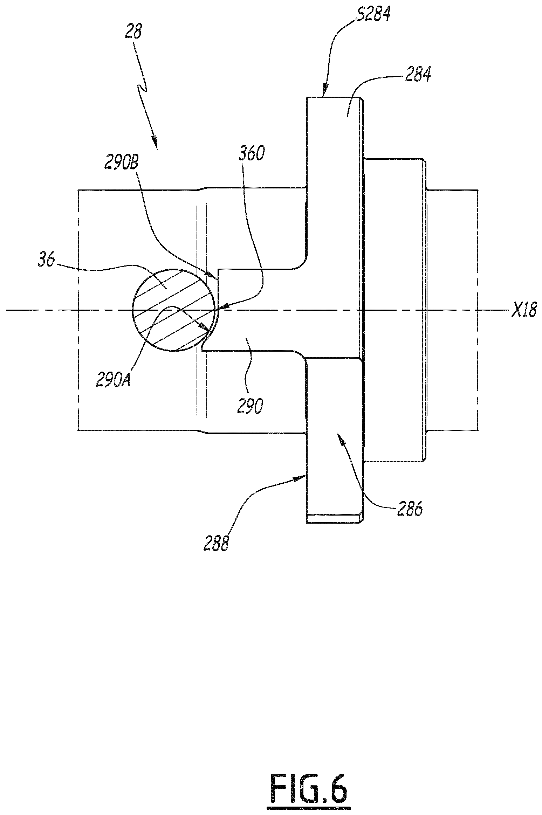

[Fig 6] La figure 6 est une vue de dessus d'une partie de l'élément femelle de la figure 5;

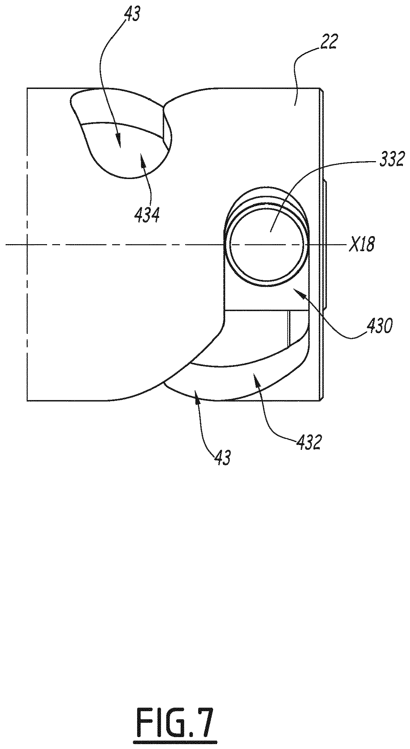

[Fig 7] La figure 7 est une vue de côté d'une rainure de guidage d'un corps interne femelle de l'élément femelle ;
[Fig 8] La figure 8 est une coupe partielle de l'élément femelle selon le plan VIII à la figure 5 ;

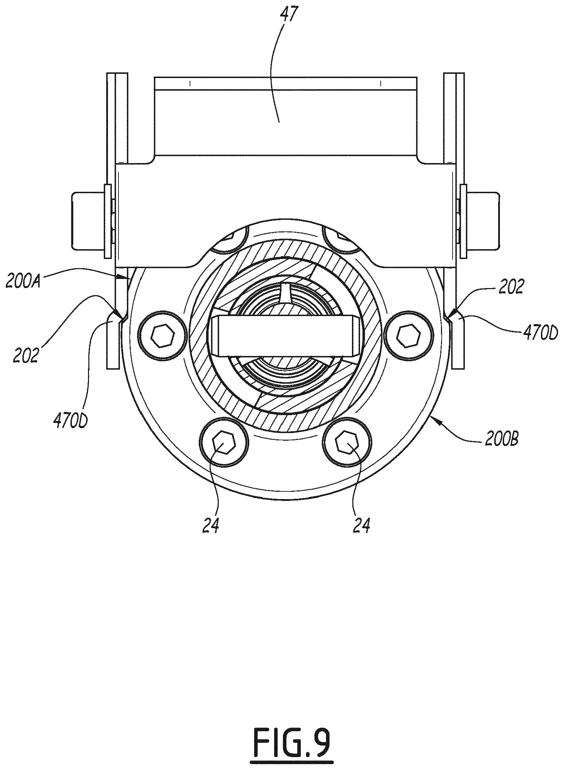

[Fig 9] La figure 9 est une coupe de l'élément femelle selon le plan IX à la figure 5 ;

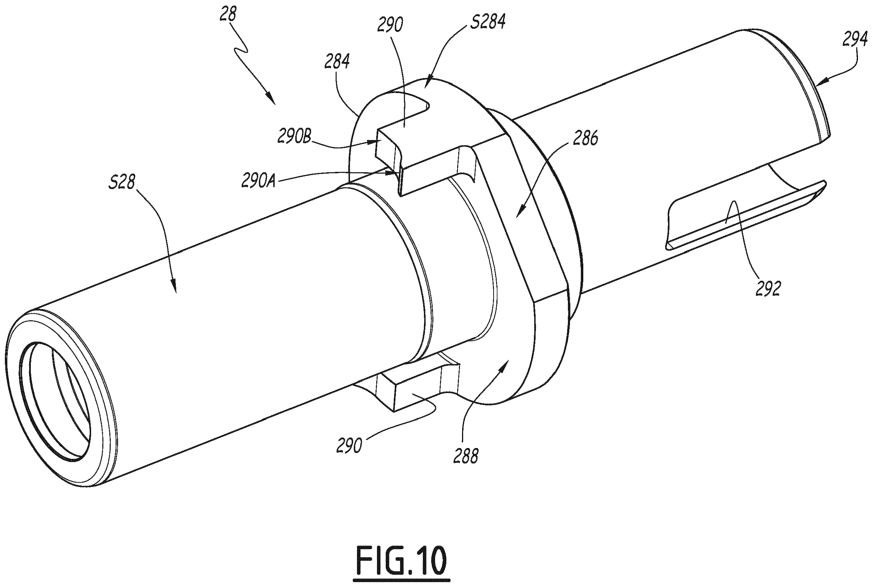

[Fig 10] La figure 10 est une vue en perspective d'un corps interne de l'élément femelle de la figure 4 ;

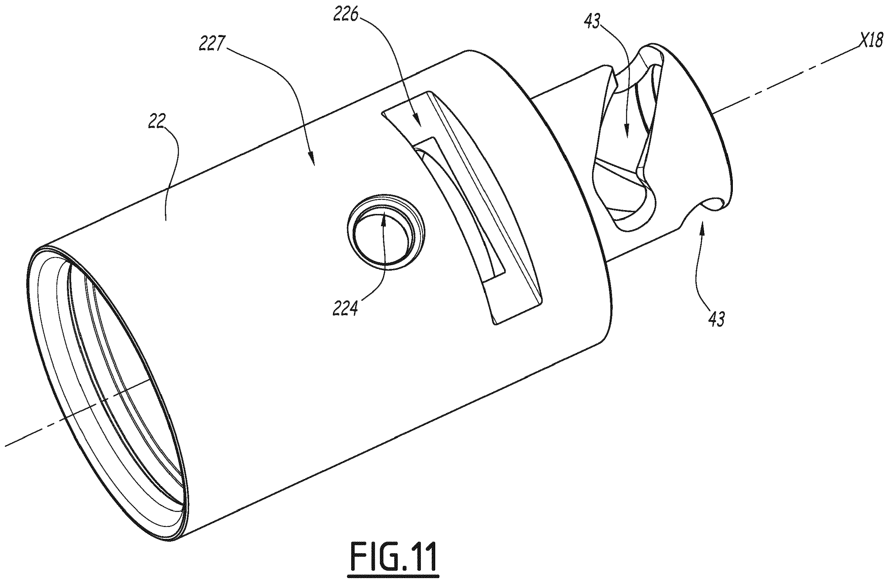

[Fig 11] La figure 11 est une vue en perspective par l'avant et le dessus d'un corps externe femelle de l'élément femelle de la figure 4 ;
[Fig 12] La figure 12 est une vue en perspective par l'arrière et le dessous du corps externe femelle de la figure 11 ;
[Fig 13] La figure 13 est une coupe transversale de l'élément femelle, un levier de manœuvre étant en position de libération ;
[Fig 14] La figure 14 est une vue analogue à la figure 13, le levier de manœuvre étant en position de blocage et le raccord étant en configuration accouplée ;
[Fig 15] La figure 15 est une coupe longitudinale du raccord dans une première phase d'accouplement ;
[Fig 16] La figure 16 est une vue de côté partiellement sectionnée longitudinalement d'une partie du raccord dans la configuration de la figure 15, montrant une rainure d'accouplement de l'élément mâle ;
[Fig 17] La figure 17 est une coupe analogue à la figure 15, dans une seconde phase d'accouplement ;
[Fig 18] La figure 18 est une partie supérieure et à plus grande échelle d'une coupe similaire à la figure 15, dans une troisième phase d'accouplement ;
[Fig 19] La figure 19 est une vue en perspective du raccord en configuration accouplée et rotation bloquée ;
[Fig 20] La figure 20 est une coupe longitudinale du raccord dans la configuration accouplée et rotation bloquée ;
[Fig 21] La figure 21 est une vue de côté de la rainure de guidage dans la configuration de la figure 20 ;
[Fig 22] La figure 22 est une coupe transversale d'un élément femelle d'un raccord conforme à un second mode de réalisation de l'invention en configuration désaccouplée ;
[Fig 23] La figure 23 est une coupe transversale de l'élément femelle de la figure 22 selon le plan XXIII ;
[Fig 24] La figure 24 est une vue de côté de l'élément mâle de la figure 2 accouplé avec l'élément femelle de la figure 22 vu en coupe longitudinale en configuration accouplée du raccord, rotation bloquée;
[Fig 25] La figure 25 est une coupe selon le plan XXV à la figure 24, le raccord étant en configuration accouplée et rotation bloquée.

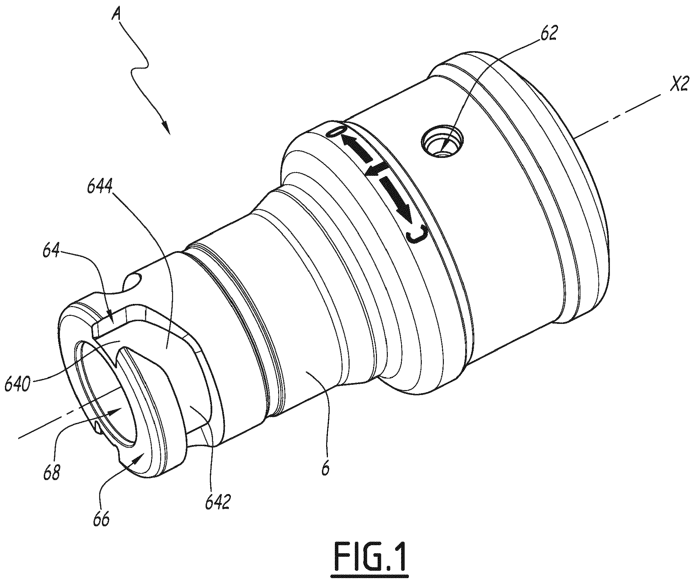

La figure 1 représente un élément mâle A de raccord. L'élément mâle A est configuré pour s'insérer dans un élément femelle B de raccord pour former un raccord fluidique R.

Dans ce qui suit les termes « axial » et « longitudinal » désignent des directions parallèles à un axe central longitudinal de l'élément mâle A, de l'élément femelle B ou du raccord R. Une surface axiale est une surface perpendiculaire à un axe longitudinal. Le terme « radial » désigne une direction perpendiculaire à un axe central longitudinal et passant par cet axe. Une surface radiale est une surface cylindrique entourant un axe central longitudinal. Le terme « orthoradial » désigne une direction perpendiculaire à une direction radiale et à une direction longitudinale. En d'autres termes, la direction orthoradiale est tangente à une surface cylindrique de section circulaire centrée sur l'axe central longitudinal. Le terme « circonférentiel » désigne une direction courbe suivant un cercle centré sur un axe central longitudinal et entourant cet axe.

Les termes « avant » et « arrière » désignent, du point de vue de l'élément mâle A et de ses parties constitutives, les côtés longitudinaux situés respectivement en vis-à-vis de l'élément femelle B et à l'opposé de l'élément femelle B. Du point de vue de l'élément femelle B et de ses parties constitutives, les termes « avant » et « arrière » désignent respectivement les côtés longitudinaux situés en vis-à-vis et à l'opposé de l'élément mâle A.

L'élément mâle A comprend un corps mâle 2 s'étendant selon un axe central longitudinal X2 et formé d'un corps interne mâle 4 et d'un corps externe mâle 6 entourant le corps interne mâle 4 et se prolongeant à l'avant du corps interne mâle 4.

Le corps externe 6 est monté avec possibilité de rotation autour de l'axe central longitudinal X2 par rapport au corps interne mâle 4, et le corps mâle 2 comporte une couronne de billes 8 interposées entre le corps interne mâle 4 et le corps externe mâle 6 et qui permettent la rotation relative des corps 4 et 6 autour de l'axe central longitudinal X2. Les billes 8 sont engagées dans une gorge circonférentielle externe 40 du corps interne mâle 4 et dans une gorge circonférentielle interne 60 du corps externe mâle 6. L'élément mâle A comporte un passage taraudé 62, ménagé à travers le corps externe mâle 6, par lequel les billes 8 sont insérées dans les gorges 40 et 60, et qui est ensuite bouché par une vis 10 insérée dans le passage taraudé 62 depuis une surface radiale externe du corps externe mâle 6. Les billes 8 solidarisent le corps externe mâle 6 et le corps interne mâle 4 en translation selon l'axe central longitudinal X2. En d'autres termes, aucune mobilité en translation axiale n'est possible entre le corps externe mâle 6 et le corps interne mâle 4 selon l'axe X2.

La partie avant du corps externe mâle 6 présente deux rainures d'accouplement 64 formées chacune d'une portion d'entrée longitudinale 640, d'une portion circonférentielle 642 et d'une portion intermédiaire 644 inclinée selon un angle de 50° par rapport à une direction longitudinale définie par l'axe central longitudinal X2. La portion intermédiaire 644 est également inclinée par rapport à la direction circonférentielle et forme une portion d'hélicoïde. La portion intermédiaire 644 se situe entre la portion d'entrée longitudinale 640 et la portion circonférentielle 642. La portion d'entrée longitudinale 640 débouche sur l'avant du corps externe mâle 6, formé par une face avant 66. Les deux rainures d'accouplement 64 sont diamétralement opposées par rapport à l'axe central longitudinal X2 et débouchent sur la surface radiale externe du corps externe mâle 6.

Le corps interne mâle 4 forme un conduit interne 42 de l'élément mâle A.

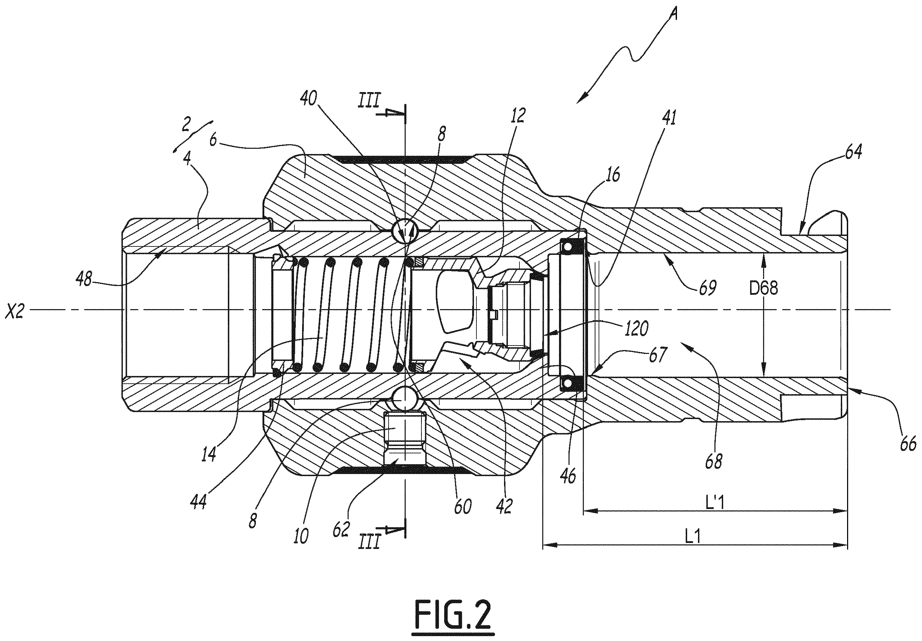

Le corps interne mâle 4 loge une soupape 12 montée dans le conduit interne 42 et repoussée par un ressort 14 vers une position de fermeture située vers l'avant de l'élément mâle A (figure 2). Le ressort 14 est monté entre la soupape 12 et une bague 44 montée de façon fixe selon l'axe X2 dans le corps interne mâle 4. La soupape 12 coopère, en position de fermeture, de manière étanche avec le corps interne mâle 4 au niveau d'un siège 46 du corps interne mâle 4 formé par une réduction de diamètre du conduit interne 42.

A l'avant du siège 46, le corps externe mâle 6 forme un volume interne 68. En position de fermeture, une face avant 120 de la soupape 12 est disposée en retrait de la face avant 66 du corps externe mâle 6 d'une distance longitudinale L1 supérieure à un diamètre interne avant D68 du volume interne 68 du corps externe mâle 6, de préférence supérieure à deux fois le diamètre interne avant D68. En position de fermeture, le joint 16 est disposé en retrait de la face avant 66 du corps externe 6 d'une distance longitudinale L'1 supérieure à un diamètre interne avant D68 du volume interne 68 du corps externe mâle 6, de préférence supérieure à deux fois le diamètre interne avant D68.

A l'arrière du corps interne mâle 4, l'élément mâle A comprend un taraudage 48 qui permet de relier le corps interne mâle 4 à une canalisation non représentée.

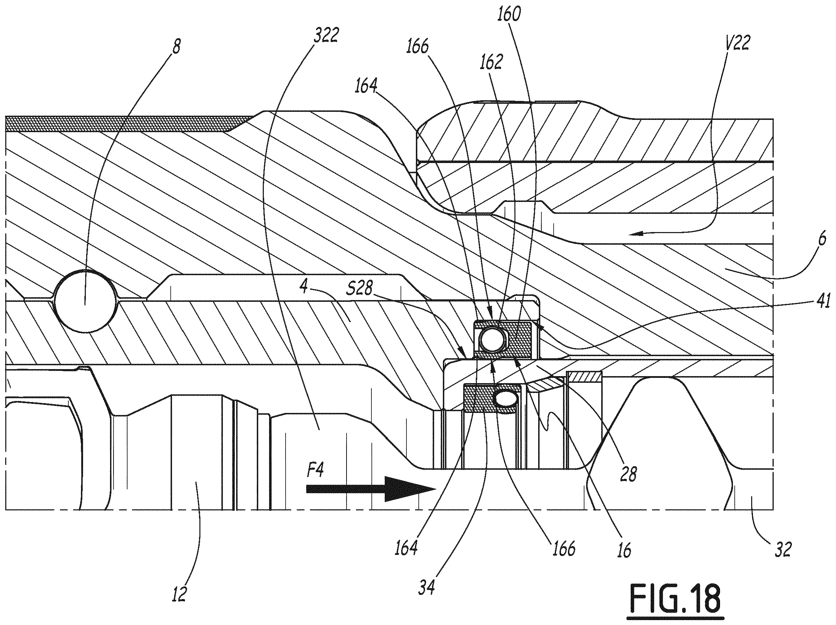

Le corps mâle 2 comprend une gorge interne 41 délimitée à l'arrière et radialement par le corps interne mâle 4 et à l'avant par le corps externe mâle 6, et disposée en avant du siège 46. Dans cette gorge interne 41 est logé un joint d'étanchéité 16 formé d'un corps élastomère 160 en forme de U avec un renfort 162, par exemple métallique, qui peut être par exemple un ressort hélicoïdal conformé en tore. Le joint 16 est également visible à plus grande échelle à la figure 18. La forme en U est ouverte vers l'arrière du corps mâle 2 et comprend deux branches 164, chacune formant une bosse radiale 166 située axialement au niveau du renfort 162 et à distance des extrémités des branches 164. Le renfort 162 est disposé radialement entre les deux branches 164 qui sont écartées par le renfort 162, l'une vers l'extérieur, l'autre vers l'intérieur, par rapport à l'axe central longitudinal X2, de manière à exercer des efforts de pression qui plaquent respectivement les deux bosses radiales 166 contre le corps mâle 2, au niveau du corps interne mâle 4, et contre une partie de l'élément femelle B lorsque celui-ci est introduit dans le volume interne 68.

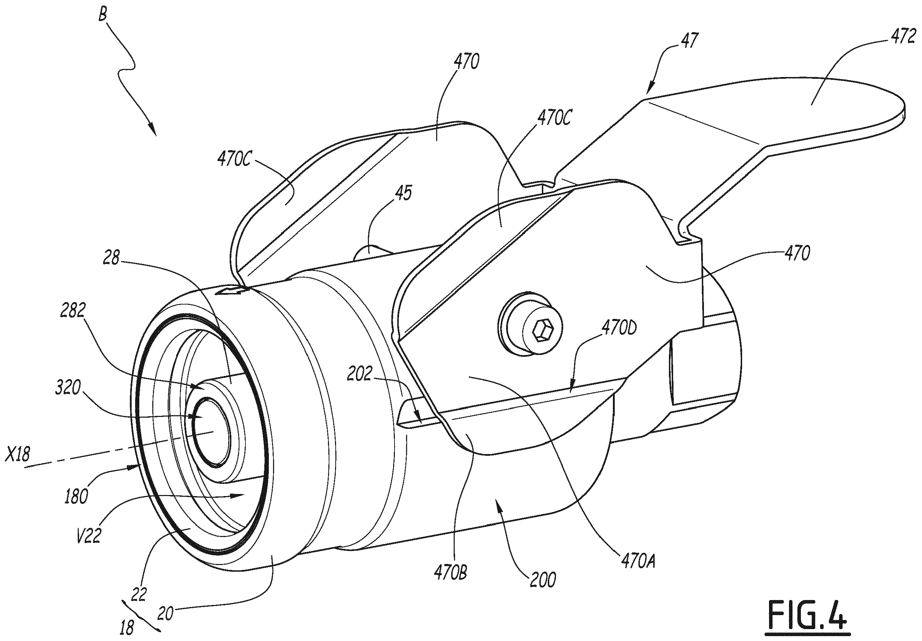

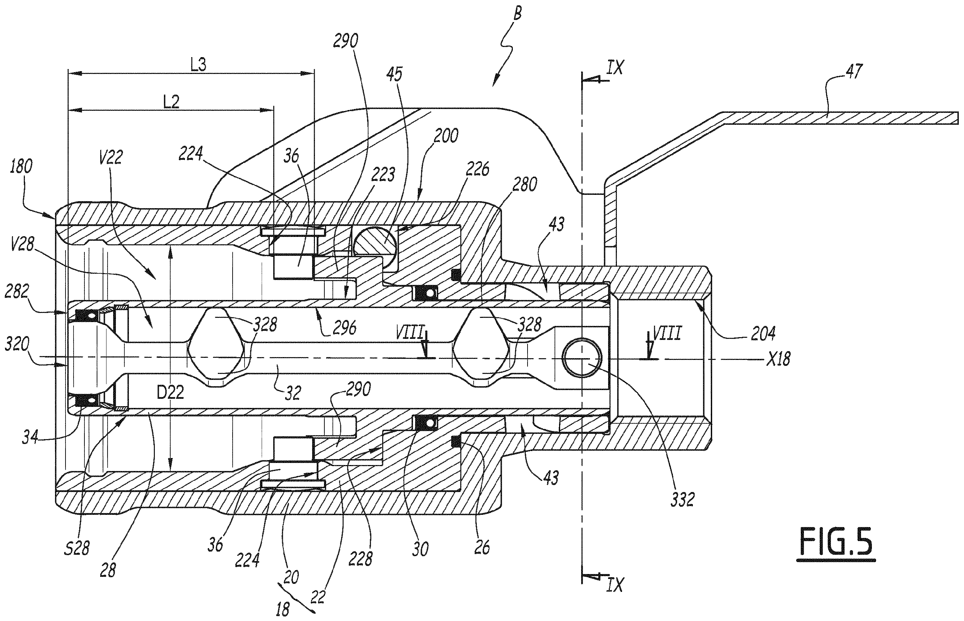

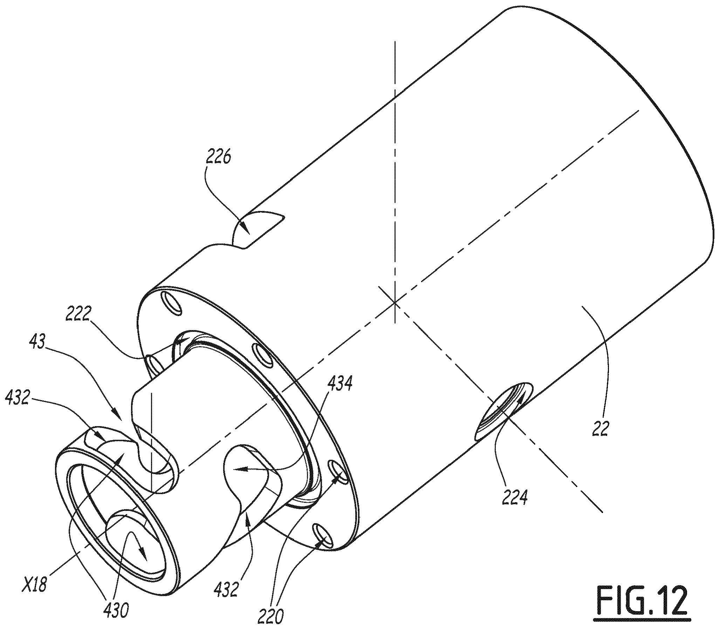

L'élément femelle B du raccord R est représenté sur les figures 4 et 5. Il comprend un corps femelle 18, formé d'un corps externe femelle 20 et d'un corps interne femelle 22, qui sont tous deux tubulaires et centrés sur un axe central longitudinal X18. Le corps externe femelle 20 est solidarisé en rotation et en translation par rapport au corps interne femelle 22 par plusieurs vis 24 engagées à travers le corps externe femelle 20 dans des trous taraudés 220 du corps interne femelle 22, visibles à la figure 12.

L'élément femelle B comprend un joint d'étanchéité 26 interposé entre le corps interne femelle 22 et le corps externe femelle 20. Ce joint 26 est disposé dans une gorge 222 d'une surface axiale externe du corps interne femelle 22 sur laquelle sont prévus les trous taraudés 220 et qui fait face à une surface axiale interne du corps externe femelle 20. Le joint 26 assure une étanchéité axiale.

La partie arrière du corps externe femelle 20 comprend un taraudage 204 pour la liaison à une canalisation non représentée.

Le corps externe femelle 20 présente une surface radiale externe 200 qui présente deux parties 200A et 200B s'étendant chacune sur une demi-circonférence et délimitées par deux rainures longitudinales formant chacune un épaulement longitudinal 202.

L'élément femelle B comporte une bague 28 logée dans le corps femelle 18 et configurée pour tourner dans le corps femelle 18 autour de l'axe central longitudinal X18. Le corps interne femelle 22 entoure la bague 28, c'est-à-dire qu'il s'étend radialement sur l'extérieur de la bague 28, en ménageant radialement entre le corps interne femelle 22 et la bague 28 un volume V22 annulaire d'accueil du corps mâle 2 lorsque celui-ci est emmanché dans l'élément femelle B.

L'élément femelle B comprend un joint d'étanchéité 30 qui est interposé entre le corps interne femelle 22 et la bague 28. Le joint d'étanchéité 30 assure une étanchéité radiale entre le corps interne femelle 22 et une partie tubulaire arrière 280 de la bague 28. De préférence, le joint d'étanchéité 30 comprend un corps élastomère en U et un renfort de manière similaire au joint d'étanchéité 16.

L'élément femelle B comprend également un piston 32. La bague 28 forme un canal interne V28 dans lequel est logé le piston 32. La bague 28 entoure radialement le piston 32. L'élément femelle B comporte un joint d'étanchéité 34 qui assure une étanchéité radiale entre le piston 32 et la bague 28, dans une position de fermeture du canal interne V28 (figure 5). Dans cette position de fermeture du piston 32, le piston 32 et la bague 28 coopèrent donc de manière étanche. Dans cette position, une face avant plane 282 de la bague 28 est alignée axialement avec une face plane avant 320 du piston 32. Le joint d'étanchéité 34 est logé dans la bague 28.

L'élément femelle B comprend deux pions d'accouplement 36 radiaux, disposés à 180° l'un par rapport à l'autre autour de l'axe central X18. Les pions d'accouplement 36 sont engagés dans des trous 224 du corps interne femelle 22 et y sont maintenus par recouvrement du corps femelle externe 20 sur l'extérieur des pions d'accouplement 36. Les pions d'accouplement 36 s'étendent radialement dans le volume d'accueil V22. Les pions d'accouplement 36 sont disposés en arrière de la face avant 282 de la bague 28. Chaque pion d'accouplement 36 est en retrait vers l'arrière de l'élément femelle B d'une face avant 180 du corps femelle 18 et en particulier est en retrait vers l'arrière de l'élément femelle B de la face avant plane 282 de la bague 28 d'une distance longitudinale L2. La distance L2 est supérieure à 0,6 fois, de préférence supérieure à 0,75 fois, un diamètre interne D22 du corps interne femelle 22, qui définit le volume d'accueil V22 de l'élément mâle A à l'avant des pions d'accouplement 36.

La bague 28 comprend une collerette externe 284 cylindrique délimitée par une surface radiale externe S284 qui est cylindrique et centrée sur l'axe longitudinal X18 et à partir de laquelle sont ménagés, en creux, deux méplats 286, parallèles entre eux et s'étendant dans une direction orthoradiale à l'axe X18.

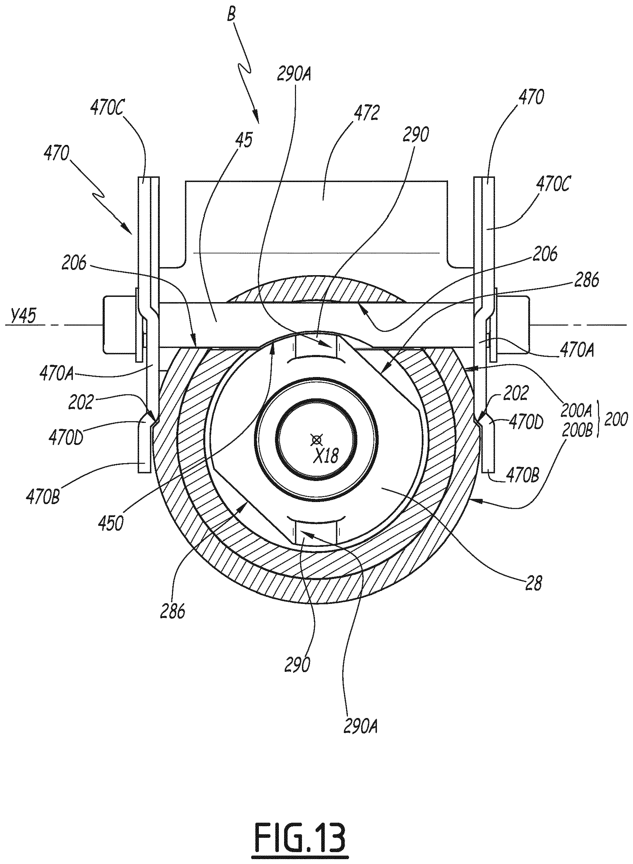

La collerette 284 présente une face avant 288 qui forme la base de deux dents longitudinales qui forment deux pions d'entraînement 290. Dans un plan orthoradial, la section des pions d'entrainement 290 comprend une surface courbe 290A qui est orientée dans la direction antihoraire lorsqu'on regarde le pion d'entrainement 290 suivant la vue de la figure 13. Les pions d'entrainement 290 comprennent également une surface plane 290B tournée vers l'avant, et qui est sensiblement alignée, selon le sens longitudinal, avec une surface externe arrière 360 du pion d'accouplement 36 en configuration désaccouplée.

La bague 28 comprend deux rainures longitudinales 292 traversant radialement la bague 28 et qui débouchent sur une face arrière 294 de la bague 28 mais qui sont limitées vers l'avant.

Comme cela est visible sur la figure 5, la bague 28 ne dépasse pas longitudinalement du corps femelle 18, ni du côté avant ni du côté arrière de l'élément femelle B. Ceci permet que d'éventuels chocs avec l'élément mâle A soient principalement absorbés par le corps femelle 18, ce qui protège une surface radiale externe cylindrique S28 de la bague 28, qui forme la surface d'étanchéité de la bague 28 avec le corps mâle 2 (voir figure 18).

De plus, un opérateur n'a pas accès aux pions d'entrainement 290 ni aux pions d'accouplement 36 pour faire tourner la bague 28 par rapport au corps femelle 18, ce qui provoquerait l'ouverture du piston 32, en configuration désaccouplée.

Chaque pion d'entrainement 290 est distant longitudinalement de la face avant 282, qui forme l'extrémité avant de la surface d'étanchéité de la bague 28 d'une distance L3, qui est inférieure à la distance L'1, qui est la distance longitudinale dans l'élément mâle A entre le joint d'étanchéité 16 et la face avant 66 du corps externe mâle 6. On s'assure ainsi que la bague 28 n'est pas entrainée en rotation par rapport au corps femelle 18 par l'élément mâle A autrement que par les pions d'entrainement 290 engagés dans les rainures d'accouplement 64.

Une partie arrière du corps interne femelle 22 comprend deux rainures de guidage 43 qui traversent radialement le corps interne femelle 22 et qui sont recouvertes radialement sur l'extérieur par le corps externe femelle 20. Ces deux rainures de guidage 43 sont diamétralement opposées par rapport à l'axe central longitudinal X18.

Chaque rainure de guidage 43 comprend une portion circonférentielle 430, une portion intermédiaire inclinée 432 et une encoche terminale 434, la portion intermédiaire inclinée 432 étant disposée entre la portion circonférentielle 430 et l'encoche terminale 434. La portion intermédiaire inclinée 432 est inclinée par rapport à la direction longitudinale et la direction circonférentielle et forme une portion d'hélicoïde. L'encoche terminale 434 est inclinée, par rapport à l'axe central longitudinal X18, dans une direction opposée à l'inclinaison de la portion intermédiaire inclinée 432. En d'autres termes, les encoches terminales 434 forment un retour vers l'arrière du corps femelle interne 22 depuis la portion intermédiaire inclinée 432.

Le piston 32 comprend une tête 322 et une partie arrière 324 reliées par une partie centrale 326 munie à différents niveaux longitudinaux de nervures de guidage 328 qui s'étendent radialement par rapport à la partie centrale 326 et exercent un contact surfacique avec une surface interne 296 de la bague 28 délimitant le conduit interne V28 de l'élément femelle B.

La partie arrière 324 comporte un perçage radial 324A traversant de part en part la partie arrière 324, dans lequel est monté serré un axe cylindrique 330 qui dépasse radialement de la partie arrière 324 à ses deux extrémités.

Les rainures de guidage 43 sont disposées autour d'une portion de la bague 28 sur laquelle sont prévues les rainures longitudinales 292. Chacune des extrémités de l'axe cylindrique 330 forme un pion de guidage 332 qui s'insère dans l'une des rainures de guidage 43 et est engagé dans l'une des rainures longitudinales 292 de la bague 28, ce qui solidarise le piston 32 en rotation avec la bague 28.

La tête du piston 32 est pleine et coopère avec le joint d'étanchéité 34, qui est de type similaire au joint d'étanchéité 16, avec un corps polymère en U, par exemple de type PTFE et un renfort interne métallique sous la forme d'un ressort en acier inoxydable à doubles spirales soudé pour former un ressort fermé. Pour le joint 34, la forme en U est ouverte vers l'arrière de l'élément femelle B, et les branches de la forme en U présentent des bosses radiales externes à distance des extrémités des branches de la forme en U.

Le corps femelle interne 22 présente une rainure orthoradiale 226 de section rectangulaire, ouverte sur une surface radiale externe 227 du corps femelle interne 22 et qui traverse le corps femelle interne 22 de part et d'autre dans une direction orthoradiale à l'axe X18. Le corps femelle externe 20 délimite la rainure orthoradiale 226 sur l'extérieur. La rainure orthoradiale 226 se prolonge par deux trous 206 qui débouchent sur la partie 200A du corps externe femelle 20.

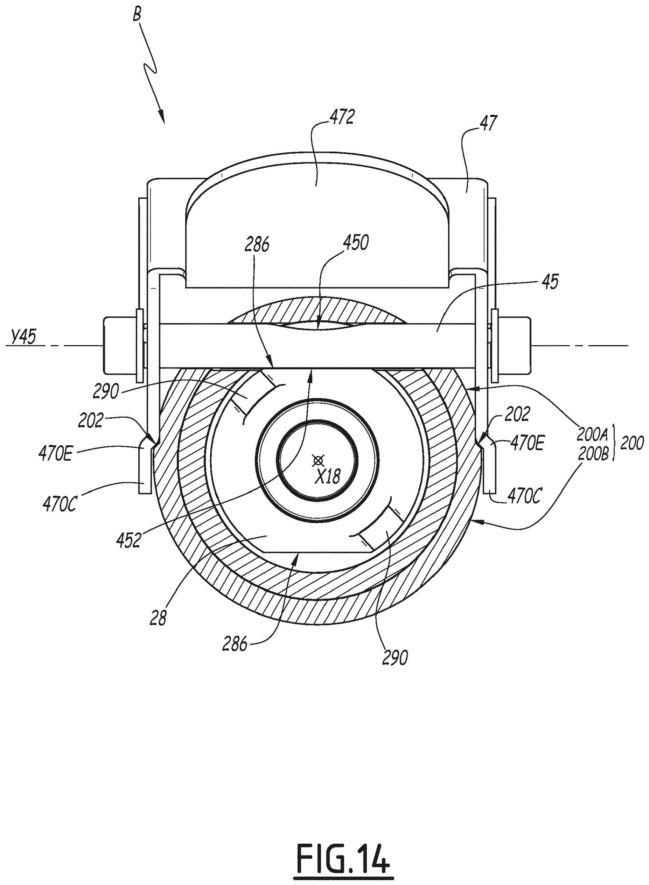

L'élément femelle B comporte une tige 45 logée dans la rainure orthoradiale 226 sans possibilité de translation ni de rotation par rapport à l'axe longitudinal X18 dans le corps femelle 18. La tige 45 s'étend au même niveau que la collerette 284 selon l'axe X18. La tige 45 traverse le corps femelle 18 de part en part selon une direction orthoradiale. La tige 45 est de forme cylindrique à section circulaire s'étendant selon un axe central longitudinal Y45 et comprend une encoche 450 formée en creux dans une surface externe 452 cylindrique de la tige 45. L'encoche 450 est en portion de surface cylindrique et de diamètre sensiblement égal au diamètre externe de la bague 28 à la même position longitudinale, c'est-à-dire au diamètre D284 de la surface radiale externe S284 de la collerette externe 284. La tige 45 est mobile en rotation autour de son axe central longitudinal Y45 entre deux positions, représentées aux figures 13 et 14 : à la figure 13, la tige 45 est dans une position de libération dans laquelle l'encoche 450 est centrée sur l'axe central longitudinal X18 de l'élément femelle B et est en regard de la bague 28, de manière que la tige 45 est entièrement disposée à l'extérieur du volume cylindrique délimité par la surface radiale externe S284 autour de l'axe X18, qui correspond au volume cylindrique de base circulaire de diamètre D284 centré sur l'axe X18. La tige 45 n'interfère alors pas avec la bague 18, qui est donc libre de tourner par rapport au corps femelle 18 autour de l'axe X18 grâce à l'encoche 450. A la figure 14, la tige 45 est dans une position de blocage dans laquelle la tige 45 coopère, par la portion de surface radiale externe 452 opposée à l'encoche 450, avec l'un des méplats 286 de la bague 28 par contact linéique. La tige 45 est alors partiellement disposée dans le volume cylindrique délimité par la surface radiale externe S284 autour de l'axe X18. En cas de rotation de la bague 28 par rapport au corps femelle 18 dans la direction du désaccouplement, le méplat 286 vient au contact de la surface radiale externe 452 de la tige 45 et forme ainsi obstacle à la rotation de la bague 28 par rapport au corps femelle 18 autour de l'axe central longitudinal X18. La tige 45 forme un organe de blocage de la rotation de la bague 28 par rapport au corps femelle 18 autour de l'axe X18.

La tige 45 est solidaire en rotation, autour de son axe central Y45, d'un levier 47 formant un organe de manœuvre de la tige 45, qui commande la rotation de la tige 45 entre la position de libération et la position de blocage, et monté en chape autour du corps externe femelle 20. Le levier 47 comprend deux flasques 470 s'étendant chacune d'un côté du corps femelle 18, et reliées chacune à l'une des extrémités de la tige 45 dépassant du corps externe femelle 20. Selon un exemple non représenté, le blocage en rotation de la tige 45 par rapport aux flasques 470 autour de l'axe Y45 se fait par coopération de deux plats ménagés sur des surfaces radiales externes des extrémités longitudinales de la tige 45 avec des surfaces complémentaires ménagées sur des logements pratiqués dans les flasques 470 pour la tige 45.

Chaque flasque 470 comprend une partie centrale plane 470A au niveau de laquelle est assurée la solidarisation avec l'extrémité de la tige 45. Chaque flasque 470 comprend, ménagées à partir de la partie centrale 470A, une première ailette 470B et s'étendant vers le bas sur la figure 4, et une deuxième ailette 470C s'étendant globalement vers le haut selon une direction oblique, sur la même figure 4. Les première et deuxième ailettes 470B et 470C sont planes et s'étendent parallèlement à la partie centrale 470A, mais sont décalées selon l'axe central Y45 vers l'extérieur de manière que, prise le long de l'axe central Y45, la distance entre les deux parties centrales 470A des deux flasques 470 est inférieure à la distance entre deux ailettes 470B ou 470C située en vis-à-vis dans une direction parallèle à l'axe central Y45.

Les deux flasques 470 sont reliés à une partie commune 472 de manœuvre du levier 47 qui s'étend perpendiculairement à une direction radiale à l'axe central longitudinal X18 en configuration accouplée et en configuration désaccouplée, rotation bloquée.

En configuration désaccouplée, chaque pion d'entrainement 290 est aligné avec un pion d'accouplement 36 le long de l'axe longitudinal X18. La surface courbe 290A du pion d'entrainement 290 forme une butée à la rotation de la bague 28 par rapport au corps femelle 18 selon le sens de désaccouplement. La bague 28 est ainsi maintenue longitudinalement entre les pions d'accouplement 290 et un épaulement 228 du corps interne femelle 22, ce qui assure une solidarisation axiale entre la bague 28 et le corps femelle 18 en configuration désaccouplée.

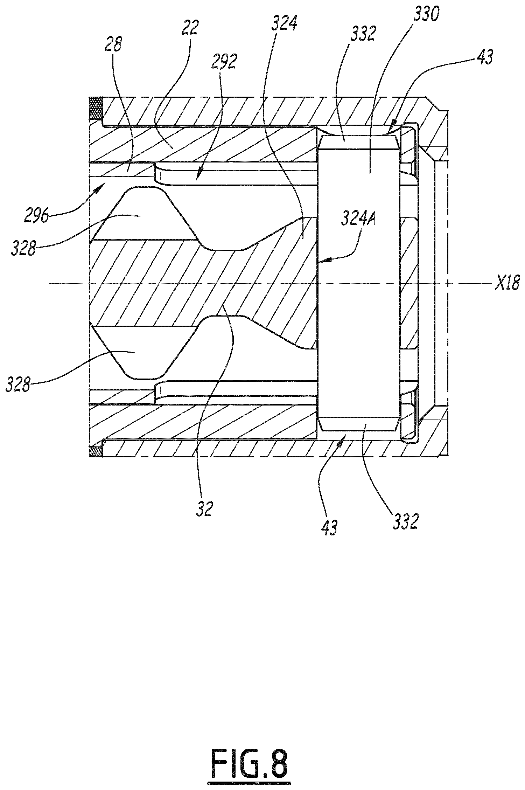

La soupape 12 et le piston 32 sont dans leur position de fermeture respective (le piston 32 est en position arrière à la figure 5, la soupape 12 en position avant à la figure 2). Les pions de guidage 332 du piston 32 sont engagés dans la portion circonférentielle 430 des rainures de guidage 43 et disposés à l'arrière des rainures longitudinales 292 (figure 8).

En configuration désaccouplée, la tige 45 est en position stable de libération de la rotation de la bague 28. Cette position est stable, car elle ne nécessite pas un maintien par l'opérateur à l'encontre d'un quelconque effort élastique qui repousserait par défaut la tige 45 dans sa position de blocage.

Les jonctions entre les premières ailettes 470B et les parties centrales 470A des flasques 470 forment des épaulements internes 470D qui font face aux épaulements longitudinaux 202 dans la position de libération du levier 47 selon une direction perpendiculaire à l'axe Y45. Ainsi, une éventuelle rotation du levier 47 vers le bas, dans une direction opposée à la rotation vers la position de blocage, est limitée. Une rotation du levier 47 vers sa position de blocage est également limitée.

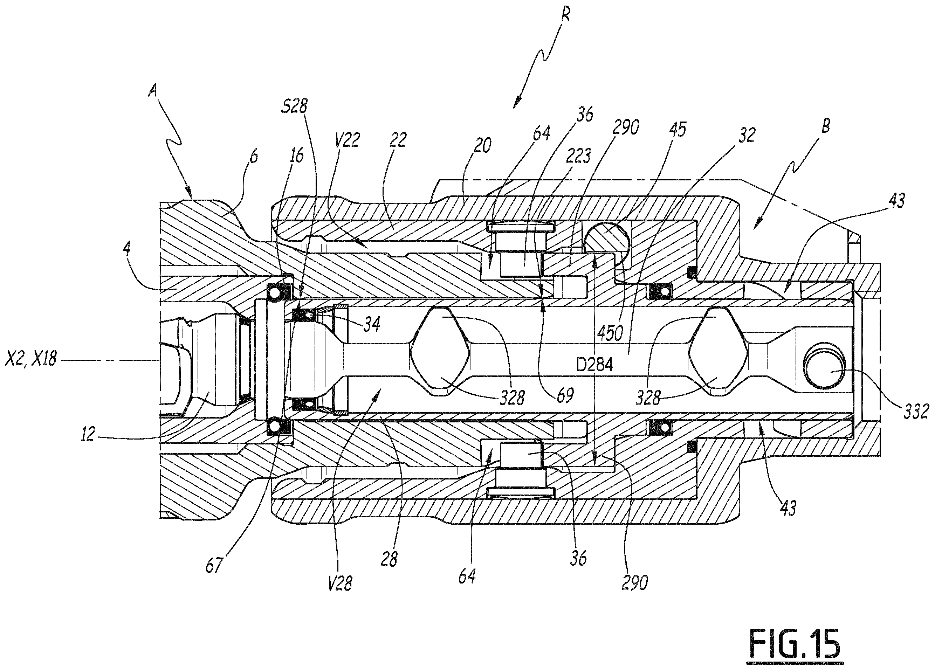

La phase d'accouplement du raccord R est décrite à partir de la figure 15 pour un pion d'accouplement 36, un pion d'entrainement 290 et un pion de guidage 332 pour simplification. Au début de l'accouplement, le corps externe mâle 6 est engagé dans le volume d'accueil V22 du corps femelle 18, et la bague 28 s'engage dans le volume interne V68 du corps interne mâle 4, au niveau du joint d'étanchéité 16. Les axes X2 et X18 sont alors confondus et forment un axe central longitudinal du raccord R et un axe d'emmanchement de l'élément mâle A et de l'élément femelle B. Le pion d'accouplement 36 et le pion d'entrainement 290 sont alignés longitudinalement avec la portion d'entrée longitudinale 640 de la rainure d'accouplement 64. Le pion d'accouplement 36 s'engage dans la portion d'entrée longitudinale 640, suivi du pion d'entrainement 290. Tant que le pion d'accouplement 36 n'est pas engagé dans la portion intermédiaire inclinée 644, la surface radiale externe S28 de la bague 28 n'est pas au contact du joint d'étanchéité 16 porté par l'élément mâle A.

Lorsque le mouvement d'insertion se poursuit, chaque pion d'accouplement 36 sort de la portion d'entrée 640 et entre dans la portion intermédiaire inclinée 644. Le pion d'entraînement 290 est alors en contact, dans la direction circonférentielle, avec un bord 640A de la portion d'entrée 640 de la rainure d'accouplement 64. La bague 28 et le corps externe mâle 6 sont alors solidarisés en rotation autour de l'axe central longitudinal X18.

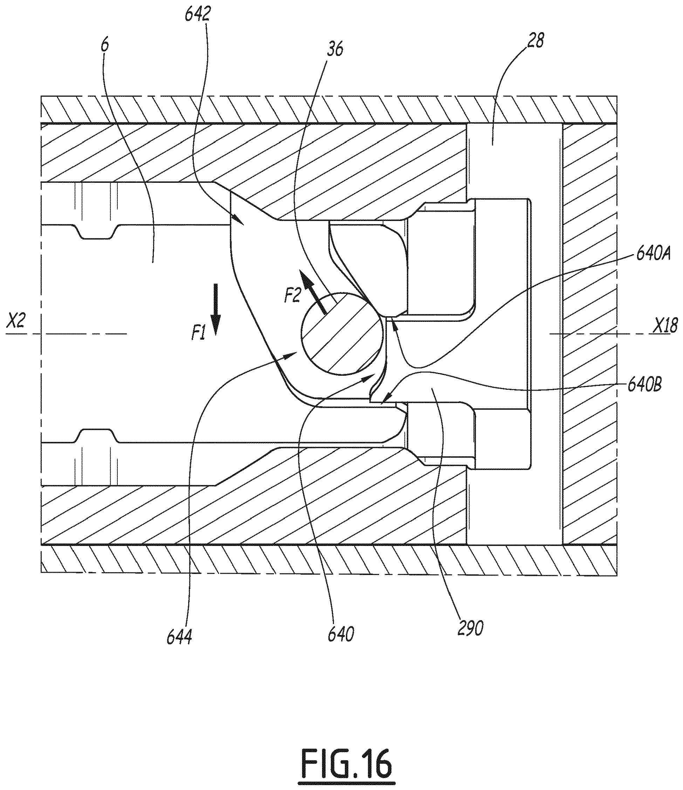

L'opérateur applique alors une rotation du corps externe mâle 6 par rapport au corps interne mâle 4 et par rapport au corps femelle 18 dans un sens de rotation d'accouplement F1, orienté de manière que le pion d'entrainement 290 s'éloigne par rapport au pion d'accouplement 36 vers le bas sur la figure 16, dans la direction circonférentielle opposée à la direction dans laquelle est orientée la surface courbe 290A du pion d'entraînement 290 (c'est-à-dire vers le haut sur cette même figure 16). La rotation du corps externe mâle 6 dans le sens d'accouplement F1 correspond à une rotation conjointe de la bague 28 dans le sens horaire, lorsque l'on regarde l'élément femelle B depuis l'avant. Le corps interne mâle 4 n'est pas en butée circonférentiellement contre la bague 28 et, pendant l'accouplement, grâce aux billes 8, la bague 28 et le corps externe mâle 6 sont conjointement mobiles en rotation autour de l'axe X18 par rapport au corps interne mâle 4.

Avec la rotation, chaque pion d'accouplement 36 progresse dans sa rainure d'accouplement 64 le long de la portion intermédiaire inclinée 644 en direction de la portion circonférentielle 642 selon la flèche F2. La bague 28 est entrainée en rotation par rapport au corps femelle 18 selon la flèche F1. La bague 28 est dès lors maintenue axialement par rapport au corps femelle 18 entre l'épaulement 228 du corps interne femelle 22 et la face avant 66 du corps externe mâle 6. Chaque pion de guidage 332 progresse alors dans la portion circonférentielle 430. Pendant que les pions de guidage 332 parcourent la portion circonférentielle 430, le piston 32 reste à la même position axiale par rapport à la bague 28, et reste donc en position de fermeture. Pendant ce temps, les pions d'accouplement 36, engagés dans la portion intermédiaire inclinée 644 des rainures d'accouplement 64, entraînent avec eux le corps femelle 18 et assurent le rapprochement du corps mâle 2 et du corps femelle 18.

Le corps externe mâle 6 présente deux surfaces radiales internes 67 et 69, qui sont étagées, disposées à l'avant par rapport au joint 16 et qui coopèrent de façon complémentaire, lors de l'insertion de l'élément mâle A, avec deux surfaces radiales externes S28 et 223 de la bague 28 qui sont étagées et toutes deux disposées à l'avant de la collerette externe 284. La surface radiale interne 67 est disposée à l'arrière de la surface radiale interne 69 et le diamètre de la surface radiale interne 67 est inférieur au diamètre de la surface radiale interne 69. La surface radiale externe S28 est disposée à l'avant de la surface radiale externe 223 et le diamètre de la surface radiale externe S28 est inférieur au diamètre de la surface radiale externe 223. Cette coopération, par engagement de la surface S28 avec la surface 67 et par engagement de la surface 223 avec la surface 69, forme un double guidage qui intervient avant que la surface radiale externe S28 de la bague 28 parvienne au contact étanche avec le corps interne mâle 4 en coopérant radialement avec le joint d'étanchéité 16 (figure 15). Le contact radial de la bague 28 avec le joint d'étanchéité 16 se fait au niveau au niveau de la bosse radiale 166 interne, que la bague 28 va repousser radialement vers l'extérieur en déformant le renfort 162.

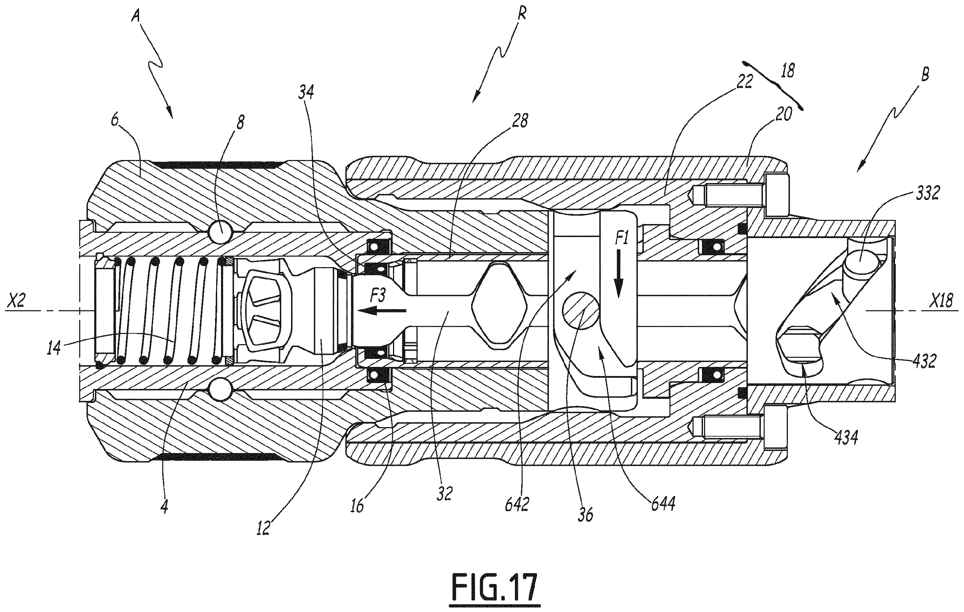

Les pions d'accouplement 36 parviennent dans la portion circonférentielle 642 lorsque le contact étanche a été pris entre le corps mâle 2 et la bague 28 au niveau du joint d'étanchéité 16. Les pions de guidage 332 entrent alors dans la portion intermédiaire inclinée 432 des rainures de guidage 43 (figure 17).

La course angulaire du pion de guidage 332 dans la portion circonférentielle 430, c'est-à-dire la course angulaire parcourue depuis la configuration désaccouplée jusqu'à atteindre la portion intermédiaire inclinée 432, correspond à la course angulaire du pion d'accouplement 36 pour parcourir la portion intermédiaire inclinée 644 de la rainure d'accouplement 64, et correspond également au mouvement longitudinal de la bague 28 par rapport au corps mâle 2 d'une première position, où la bague 28 ne coopère pas de manière étanche avec le corps mâle 2, visible en figure 15, à une deuxième position de contact étanche de la bague 28 avec le corps mâle 2, par l'intermédiaire du joint 16, visible en figure 17.

Lorsque la rotation du corps externe mâle 6 selon le même sens d'accouplement F1 est poursuivie, les pions de guidage 332 progressent dans la portion intermédiaire inclinée 432 des rainures de guidage 43, ce qui crée un mouvement du piston 32 vers l'avant par rapport à la bague 28, selon la flèche F3. L'ensemble formé par la bague 28 et le piston 32 tourne autour de l'axe central longitudinal X18 par rapport au corps femelle 18. Dans ce mouvement vers l'avant du piston 32, la tête pleine 322 quitte le contact étanche avec la bague 28 et repousse la soupape 12 vers sa position d'ouverture en direction de l'arrière de l'élément mâle A, à rencontre de l'effort du ressort 14. Les pions d'accouplement 36, engagés dans la portion circonférentielle 642 de la rainure d'accouplement 64, empêchent la désolidarisation longitudinale du corps mâle 2 et du corps femelle 18. La bague 28 est maintenue longitudinalement dans le corps femelle 18 avec la collerette 284 engagée entre la face avant 66 du corps mâle 2 et l'épaulement 228 du corps interne femelle 22, ce qui assure une solidarisation axiale entre la bague 28 et le corps femelle 18 en configuration accouplée. Les pions de guidage 332 parviennent à un point haut des rainures de guidage 43, situé à l'intersection de la portion intermédiaire inclinée 432 et de l'encoche terminale 434.

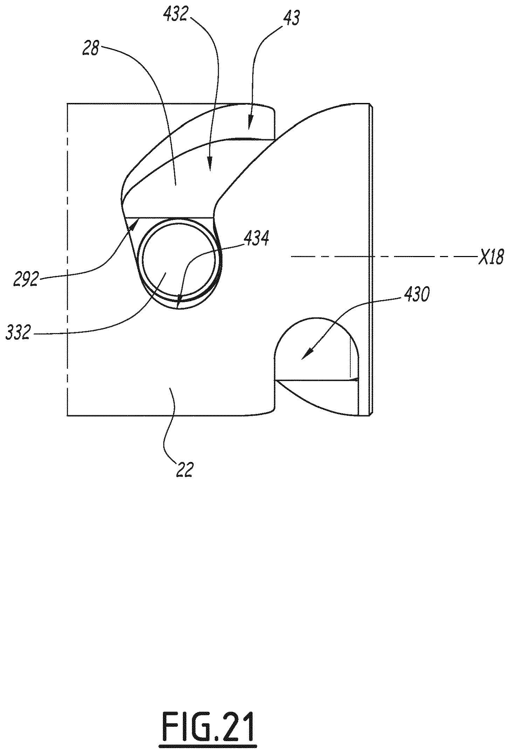

Lorsque la rotation se poursuit, les pions de guidage 332 s'engagent dans les encoches terminales 434, avec un léger mouvement arrière du piston 32 selon la flèche F4 par rapport au corps femelle 18 et à la bague 28, ce mouvement résultant de la force exercée par le ressort 14 de la soupape 12 sur le piston 32 et de l'inclinaison vers l'arrière de l'encoche terminale 434 (figure 21). En d'autres termes, le mouvement du piston 32 entre sa position de fermeture, en configuration désaccouplée du raccord, et sa position d'ouverture, en configuration accouplée du raccord, présente une sur-course longitudinale, au-delà de la position d'ouverture vers l'avant de l'élément femelle B. Les pions de guidage 332 viennent en butée contre l'extrémité borgne des encoches terminales 434. Cette surcourse correspond à la distance, selon la direction longitudinale, entre le point haut de la rainure de guidage 43 et la butée formée par l'extrémité borgne de l'encoche terminale 434.

La configuration accouplée est alors atteinte. Le piston 32 et la soupape 12 sont en position d'ouverture (position avancée pour le piston 32, position reculée pour la soupape 12). Les conduits internes V28 et 42 communiquent fluidiquement et le joint 16, interposé radialement entre la bague 28 et le corps externe mâle 6, assure l'étanchéité entre l'élément mâle A et l'élément femelle B. Entre la configuration désaccouplée et la configuration accouplée, la bague 28 a subi une rotation de l'ordre de 135° autour de l'axe longitudinal X18. Entre la configuration désaccouplée et la configuration accouplée, le corps externe mâle 6 a parcouru une course angulaire identique à la rotation de la bague 28 autour de l'axe X18. En configuration accouplée, grâce aux billes 8, la bague 28 et le corps externe mâle 6 sont conjointement mobiles en rotation autour de l'axe X18 par rapport au corps interne mâle 4.

Durant toute la phase d'accouplement depuis la configuration désaccouplée à la configuration accouplée, la tige 45 est restée en position de libération. Le raccord R est alors dans une configuration accouplée mais avec la rotation de la bague 28 non bloquée, ce qui signifie qu'une rotation du corps externe mâle 6 par rapport au corps femelle 18 dans le sens du désaccouplement est possible.

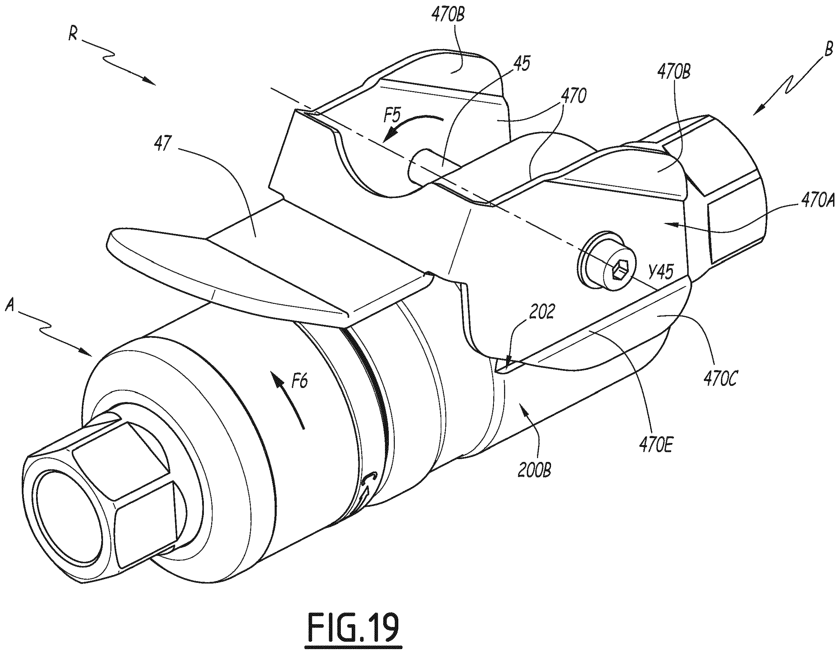

Les méplats 286 de la bague 28 sont alors parallèles à l'axe Y45 de la tige 45. Le levier 47 peut alors être entrainé en rotation par l'opérateur autour de l'axe Y45, sur une course d'environ 150° selon la flèche F5 vers sa position de blocage (figure 19) pour amener la surface radiale externe 452 de la tige 45, opposée à l'encoche 450, face au méplat 286 tourné vers la tige 45, dans la configuration de la figure 14.

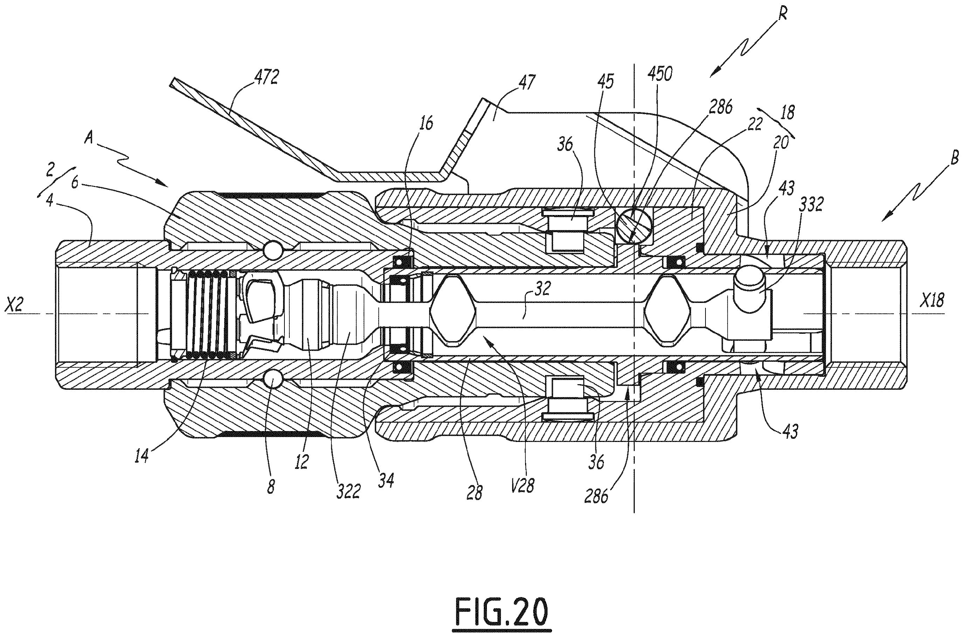

Dans cette rotation entre la position de libération et la position de blocage, les parties centrales 470A des flasques 470 sont amenées au niveau de la partie 200B s'écartent élastiquement l'une de l'autre, ce qui freine le mouvement du levier 47 vers sa position de blocage, puis se resserrent lorsque les secondes ailettes 470C ont pris position autour de la partie 200B. Dans cette position, des jonctions entre les secondes ailettes 470C et les portions centrales 470A, formant des épaulements internes 470E, sont amenées en position basse sur la figure 19, face aux épaulements longitudinaux 202 selon une direction perpendiculaire à l'axe Y45. La coopération des épaulements internes 470E avec les épaulements longitudinaux 202 limite la possibilité de rotation du levier 47 au-delà de sa position de blocage. Une configuration accouplée avec rotation bloquée de la bague 28 est alors obtenue (figure 20). Le mouvement du levier 47 vers sa position de libération est freiné par la coopération des épaulements longitudinaux 202 et des épaulements internes 470E puisque les parties centrales 470A resserrées en regard des épaulements longitudinaux 202 doivent s'écarter pour permettre cette rotation.

Pour désaccoupler le raccord R, l'opérateur doit tout d'abord tourner le levier 47 autour de l'axe Y45 pour l'amener en position de libération, dans la direction opposée à la flèche F5. L'encoche 450 est alors face au méplat 286. L'opérateur peut à nouveau tourner la bague 28 en exerçant une rotation du corps externe mâle 6 par rapport au corps femelle 18 dans un sens de désaccouplement F6 opposé au sens d'accouplement F1. Dans cette rotation, un bord 640B de la portion d'entrée longitudinale 640, opposé au bord 640A, coopère circonférentiellement avec la bague 28 en venant au contact du pion d'entrainement 290 ce qui solidarise la bague 28 et le corps externe mâle 6 pour provoquer la rotation conjointe de la bague 28 et du corps externe mâle 6 dans le sens de désaccouplement F6. Le sens de désaccouplement F6 correspond à une rotation de la bague 28 dans le sens antihoraire si l'on regarde l'élément femelle B depuis l'avant.

Les pions de guidage 332 s'engagent alors dans la portion intermédiaire inclinée 432 des rainures de guidage 43, après une sur-course du piston 32 vers l'avant, tandis que le pion d'accouplement 36 se déplace dans la portion circonférentielle 642 de la rainure d'accouplement 64 en direction de la portion d'entrée longitudinale 640. Le piston 32 recule vers l'arrière par rapport à la bague 28. La soupape 12 suit le mouvement du piston 32, repoussée par son ressort 14 vers l'avant de l'élément mâle A. Lorsque les pions d'accouplement 36 sont alignés avec les portions d'entrée longitudinales 640 de la rainure d'accouplement 64, les pions d'accouplement 36 viennent en butée contre les surfaces courbes 290A des pions d'entrainement, ce qui limite le mouvement du piston 32 par rapport à la bague 28 lorsque le piston 32 revient en position reculée de fermeture. La soupape 12 revient à sa position de fermeture. Les pions d'accouplement 36 et les pions d'entrainement 290 peuvent être dégagés de la rainure d'accouplement 64 et les deux éléments du raccord R sont dissociés l'un de l'autre. Les deux éléments du raccord R sont alors en configuration désaccouplée.

L'invention procure les avantages suivants :
- La cinématique comprenant le piston 32 à pions de guidage 332 montés dans une rainure longitudinale 292 de la bague tournante 28 et dans les rainures de guidage 43 du corps femelle interne 22 est particulièrement adaptée aux applications cryogéniques, dans lesquelles de la glace peut se former entre les pièces (et doit être brisée par rotation relative des pièces constitutives du raccord) et/ou aux applications dans lesquelles les joints d'étanchéité utilisés sont plus difficilement déformables que les joints élastomères toriques conventionnels.
- La rotation libre du corps externe mâle 6 par rapport au corps interne mâle 4 permet de ne pas solliciter en torsion les canalisations lors de l'accouplement ou en configuration accouplée du raccord fluidique R.
- L'organe de blocage formé par la tige 45 sécurise la configuration accouplée, contre les déconnexions intempestives. La rotation entre la bague 28 et le corps femelle 18 étant bloquée par l'organe de blocage, la rotation libre du corps externe mâle 6 par rapport au corps interne mâle 4, permise par la couronne de billes 8, évite que les torsions entre les canalisations reliées à l'élément mâle A et à l'élément femelle B sollicitent l'organe de blocage. Ces torsions sont absorbées par la rotation libre entre le corps interne mâle 4 et le corps externe mâle 6 pendant l'accouplement et en configuration accouplée.
- La mise en œuvre de la liberté de rotation intégrée sur l'élément mâle A permet, contrairement à une liberté de rotation intégrée sur l'élément femelle B, de simplifier la séquence d'accouplement. En effet, pour un élément femelle B intégrant une liberté de rotation entre un corps interne et un corps externe, il y aurait un risque de pouvoir intempestivement ouvrir le piston 32 alors qu'aucun élément mâle A n'est emmanché dans l'élément femelle B, ce qui nécessiterait des systèmes de blocage supplémentaires à libérer en configuration désaccouplée préalablement à l'accouplement.
- Le fait que les pions d'accouplement 36 et les pions d'entrainement 290 sont en retrait de la face avant 282 de la bague 28 limite tout risque d'action intempestive sur ces pions, en dehors de la séquence d'accouplement.
- Grâce à la portion intermédiaire inclinée 644 de la rainure d'accouplement 64 associée à la portion circonférentielle 430 de la rainure de guidage 43, la première phase de rotation de la bague 28 en cours d'accouplement sert à la prise d'étanchéité radiale entre la bague 28 et le corps mâle 2, au niveau du joint d'étanchéité 16, avant tout mouvement axial du piston 32 par rapport à la bague 28. La démultiplication obtenue par le contact entre le pion d'accouplement 36 et la portion intermédiaire inclinée 644 permet avantageusement de déformer le joint 16 en U avec renfort, qui est plus difficilement déformable qu'un joint torique classique.
- L'organe de blocage orthoradial formé par la tige 45 limite l'encombrement radial de l'élément femelle B. Comme la tige 45 traverse le corps femelle 18 de part en part, et est guidée dans le corps femelle 18, la tige 45 offre un blocage étendu et symétrique avec le méplat 286 de la bague 28. L'organe de blocage résiste alors efficacement aux efforts intempestifs de déverrouillage. Un seul des deux méplats 286 de la bague 28 est fonctionnel pour le blocage de la bague 28, l'autre méplat 286 permettant que la bague puisse être montée dans le corps femelle 18 dans l'une ou l'autre de deux positions opposées à 180° autour de l'axe longitudinal X18.
- La manœuvre de la tige 45 est facilitée par l'organe de manœuvre (qu'il s'agisse du levier 47 ou d'un manchon de manœuvre décrit dans la suite). En particulier, la rotation du levier 47 entre la position de blocage et la position de libération rend ces positions facilement identifiables par l'opérateur.
- Le levier 47 en position de blocage recouvre partiellement le corps externe mâle 6 en configuration accouplée, ce qui limite l'accès au corps externe mâle 6 pour la rotation de déverrouillage tant que le blocage de la rotation de la bague 28 n'est pas levé. En position de libération de la rotation de la bague 28, le levier 47 s'étend uniquement en arrière de la face avant 180 du corps femelle 18, ce qui permet la manœuvre du corps externe mâle 6.
- Les rainures longitudinales 292 de la bague 28 débouchantes sur l'arrière de la bague 28 facilitent le montage. Les rainures longitudinales 292 ne participent pas à la butée longitudinale du mouvement du piston 32 vers sa position de fermeture arrière par rapport à la bague 28 : c'est une butée circonférentielle formée par la surface courbe 290A entre pion d'entrainement 290 et le pion d'accouplement 36 qui assure cette position de fermeture. Le piston 32 en position de fermeture est donc maintenu axialement dans la bague 28 sans toutefois être dépourvu de jeu axial avec la bague 28, ce qui permet une légère adaptation de la position longitudinale du piston 38 avec le joint 34 porté par la bague 28.
- La surcourse apportée par la rainure de guidage 43 entre son point haut et l'encoche terminale 434 participe au maintien du raccord R en configuration accouplée et limite les efforts sur l'organe de blocage en position de blocage.
- Le joint 16 avec corps élastomère en U et renfort est plus résistant aux basses températures qu'un joint torique élastomère classique. En outre, ce type de joint dont le contact se fait au niveau des bosses externes des branches, bosses disposées à distance des extrémités des branches, est plus rigide qu'un joint à lèvre dont l'extrémité de la lèvre est au contact de la pièce opposée et est sollicitée par les mouvements d'emmanchement et de désemmanchement successifs de la pièce opposée. De préférence, ce type de joint avec corps élastomère en U et renfort est utilisé pour toutes les étanchéités entre deux pièces en mouvement relatif du raccord rapide, comme par exemple pour les joints 16, 30 et 34. De préférence, la forme en U du joint 34 est ouverte dans le sens longitudinal de mouvement du piston 32 de sa position d'ouverture à sa position de fermeture.

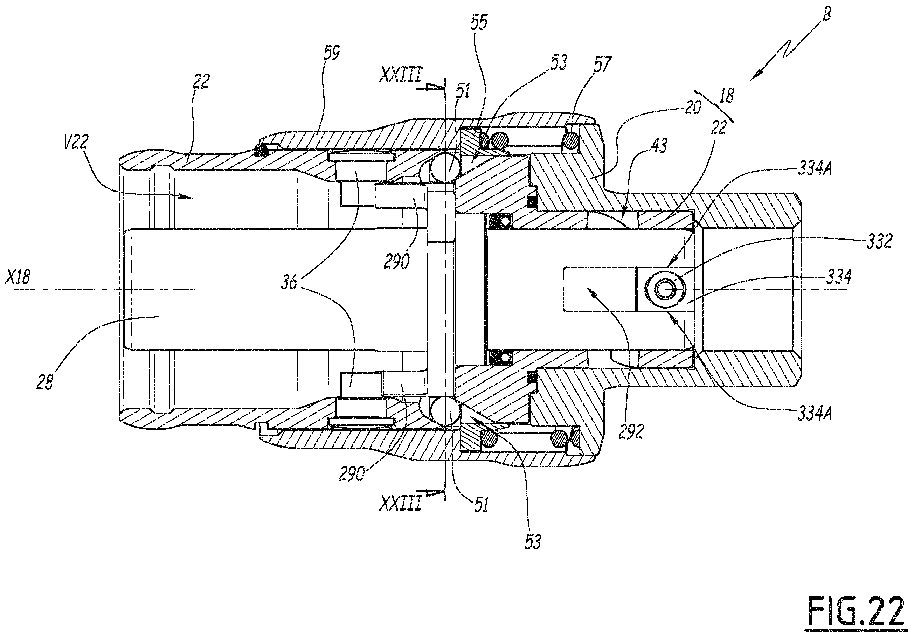

Un second mode de réalisation de l'invention est représenté sur les figures 22 à 25. Dans ce mode de réalisation, les éléments communs au premier mode de réalisation portent les mêmes références et fonctionnent de la même manière. En particulier, l'élément mâle A est identique au premier mode de réalisation et en configuration désaccouplée, pendant l'accouplement et en configuration accouplée, les corps interne mâle 4 et externe mâle 6 sont libres en rotation l'un par rapport à l'autre autour de l'axe longitudinal X2 mais dépourvus de mobilité relative en translation le long de l'axe X2.

Dans ce mode de réalisation, l'organe de blocage de la rotation de la bague 28 est formé par deux tiges 51 orthoradiales montées chacune avec possibilité de déplacement dans une rainure orthoradiale 53 du corps interne femelle 22. Les deux tiges 51 sont parallèles et les deux rainures 53 symétriques par rapport à l'axe X18. Les rainures 53 sont inclinées et convergent vers l'avant de l'élément femelle B. Elles débouchent dans un volume interne du corps interne femelle 22 au niveau de la collerette externe 284 de la bague 28. En configuration désaccouplée, les deux tiges 51 sont repoussées vers l'avant par une surface axiale avant d'une rondelle 55 annulaire qui est repoussée par un ressort 57. La rondelle 55 est en appui sur l'avant contre un manchon de manœuvre 59 monté autour du corps femelle 18 et contre les tiges 51. Le manchon 59 forme l'organe de manœuvre des tiges 51. Le manchon 59 commande le mouvement des tiges 51 de la position de blocage à la position de libération dans la mesure où il autorise le déplacement des tiges 51 de la position de blocage à la position de libération. Le manchon de manœuvre 59 est maintenu axialement sur le corps femelle 18 par une butée solidaire du corps interne femelle 22.

Dans ce mode de réalisation, chaque pion de guidage 332 comprend un patin 334 présentant deux surfaces parallèles 334A qui coopèrent avec les deux surfaces longitudinales d'une rainure longitudinale 292 pour le coulissement du piston 32 par rapport à la bague 28.

Comme dans le premier mode de réalisation, en cours d'accouplement, le pion d'entrainement 290 vient en coopération circonférentielle avec le bord 640A du corps interne mâle 6 ce qui solidarise la bague 28 avec le corps externe mâle 6 en rotation autour de l'axe X18 ; les pions d'accouplement 36 s'engagent jusque dans les portions circonférentielles 642 des rainures d'accouplement 64 ; l'ouverture du piston 32 se produit par déplacement des pions de guidage 332 dans les rainures de guidage 43 avec portion inclinée.

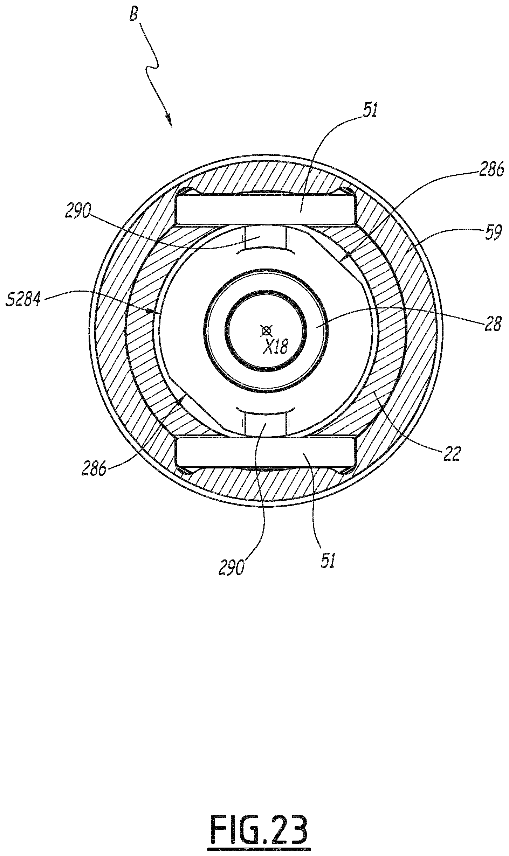

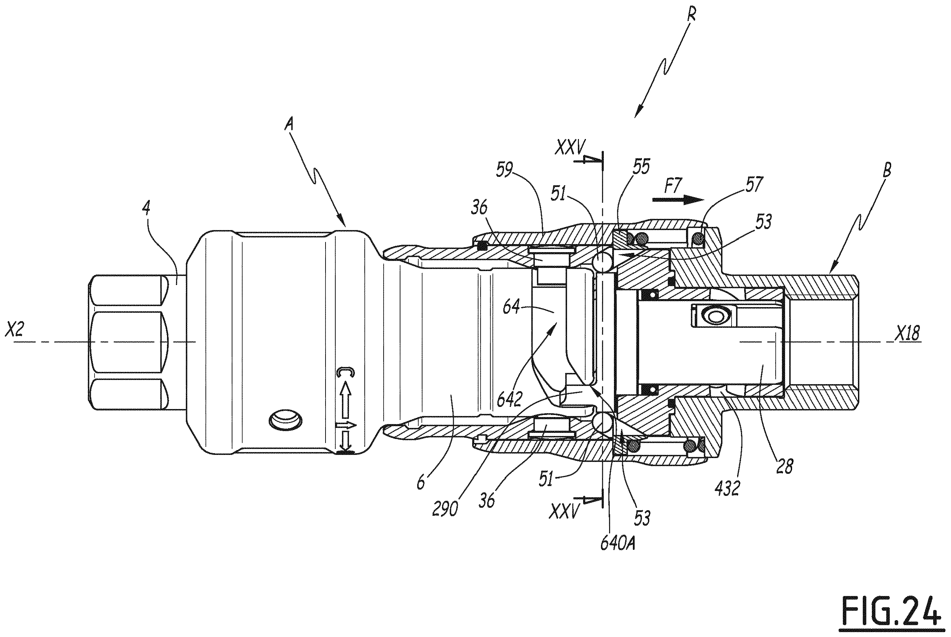

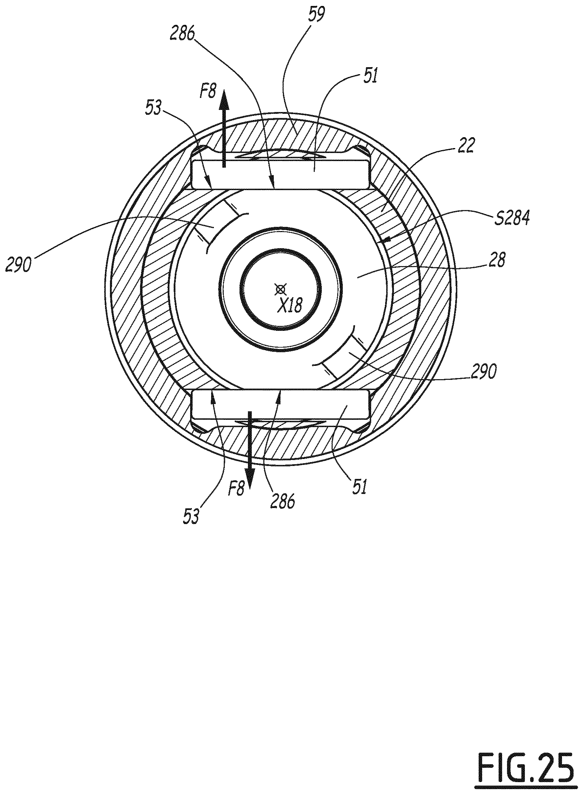

En configuration désaccouplée (figures 22 et 23), les deux tiges 51 sont maintenues au contact de la surface radiale externe S284 de la bague 28 et sont donc entièrement disposées à l'extérieur du volume cylindrique délimité par la surface radiale externe S284 autour de l'axe X18. Les tiges 51 n'empêchent donc pas la rotation de la bague 28, et sont donc en position de libération, même si l'opérateur n'agit pas sur le manchon de manœuvre 59. La position de libération des tiges 51 en configuration désaccouplée est donc une position stable. Lorsque, dans la séquence d'accouplement, du fait de la rotation de la bague 28, les méplats 286 parviennent en position parallèle aux tiges 51 en configuration accouplée, les tiges 51 sont repoussées en direction de la bague 28, en direction de l'axe X18, et maintenues contre les méplats 286 par la rondelle 55 et le ressort 57. Le mouvement des tiges 51 de la position de libération à la position de blocage en configuration accouplée est donc automatique. Par coopération avec les méplats 286, les tiges 51 sont alors en position de blocage (figures 24 et 25) dans laquelle elles viennent au contact des méplats 286. Chaque tige 51 s'étend alors partiellement dans le volume cylindrique délimité par la surface radiale externe S284 autour de l'axe X18 et forme obstacle à la rotation de la bague 28 si celle-ci est entraînée en rotation par rapport au corps femelle 18 dans le sens de désaccouplement. En position de blocage, les tiges 51 sont solidaires du corps femelle 18 autour de l'axe longitudinal X18 et empêchent la rotation de la bague 28 dans le sens du désaccouplement. Les positions de libération et de blocage de chaque tige 51 sont parallèles.

Pour commander le mouvement des tiges 51 de leur position de blocage à leur position de libération, l'opérateur repousse le manchon de manœuvre 59 vers l'arrière de l'élément femelle B, selon la flèche F7, à l'encontre de l'effort du ressort 57, ce qui entraîne la rondelle 55 vers l'arrière et dégage les tiges 51 de tout effort élastique. Les tiges 51 sont alors libres de se déplacer dans les rainures 53 vers l'extérieur. Lors de la rotation de la bague 28 dans le sens du désaccouplement, alors que le manchon de manœuvre 59 est maintenu en arrière, les tiges 51 sont repoussées par la surface radiale externe S284 de la bague 28 dans les rainures 53 en position de libération selon les flèches F8. Dans ce mode de réalisation, les deux méplats 286 de la bague 28 sont fonctionnels.

Selon une variante non représentée, les tiges 45 ou 51 s'étendent selon un axe central qui est transversal mais non orthoradial à l'axe central longitudinal X18.

Selon une autre variante non représentée, le joint 16 établissant l'étanchéité entre le corps mâle 2 et le corps femelle 18 peut être logé dans une gorge périphérique externe de la bague 28. La forme en U du joint 16 est alors ouverte vers l'arrière de l'élément femelle B.

Selon une autre variante non représentée, le joint 34 établissant l'étanchéité entre le piston 32 et la bague 28 peut être logé dans une gorge périphérique externe du piston 32.

Selon une autre variante non représentée, les pions d'entrainement peuvent être prévus sur l'avant du corps externe mâle 6, tandis que des encoches d'entrainement peuvent alors être prévues sur la bague 28 pour la coopération circonférentielle entre le corps externe mâle 6 et la bague 28.

Selon une autre variante non représentée, l'élément mâle A peut ne pas comprendre de soupape 12.

Selon une autre variante non représentée, la position d'ouverture du piston 32 peut être une position reculée et la position de fermeture du piston 32 est alors une position avancée. La portion inclinée de la rainure de guidage 43 est alors orientée de manière à obtenir, lors de l'accouplement, un déplacement du piston 32 vers l'arrière de l'élément femelle B.

Selon une autre variante non représentée, l'élément mâle A peut comprendre une seule rainure d'accouplement 64, et l'élément femelle B peut comprendre un seul pion d'accouplement 36 et un seul pion d'entraînement 290. Egalement, l'élément femelle B peut comprendre un seul pion de guidage 332 et une seule rainure de guidage 43.

Selon une autre variante non représentée, pour un guidage en rotation plus précis des corps interne mâle 4 et corps externe mâle 6, l'élément mâle A peut comprendre deux couronnes de billes 8 interposées entre le corps externe mâle et le corps interne mâle, ou plus de deux couronnes de billes 8, ces couronnes étant décalées les unes des autres le long de l'axe longitudinal X2.

Selon une autre variante non représentée, l'élément femelle B peut comprendre un organe de solidarisation longitudinale de la bague 28 dans le corps femelle 18 qui permet la rotation relative de la bague 28 et du corps femelle 18 autour de l'axe X18. Cet organe de solidarisation peut être un pion fixé dans le corps femelle, faisant radialement saillie du corps femelle vers l'intérieur et engagé dans une rainure circonférentielle externe de la bague.

Selon une autre variante non représentée, la tige 45 avec encoche 450 est mobile, par rapport au corps femelle 18, entre la position de blocage et la position de libération, autour d'un axe incliné par rapport à la direction longitudinale et qui n'est pas un axe orthoradial. Par exemple cet axe de rotation est radial à l'axe central longitudinal et perpendiculaire à un méplat 286 de la bague 28 en configuration accouplée. L'encoche est alors formée en creux à partir d'une surface externe d'extrémité de la tige. En position de blocage, la surface externe d'extrémité de la tige est disposée dans le volume cylindrique délimité par la surface radiale externe S284 cylindrique de la bague et coopère avec le méplat 286 de la bague 28 pour bloquer la rotation de la bague 28 par rapport au corps femelle dans le sens de désaccouplement. Avec la rotation de la tige entre la position de blocage et la position de libération, la surface externe d'extrémité de la tige est décalée longitudinalement du méplat 286 tandis que l'encoche formée dans la surface externe d'extrémité de la tige est amenée en regard de la surface radiale externe S284 de la bague 28 et n'interfère pas avec la rotation de la bague dans le sens du désaccouplement et le sens d'accouplement.

Pour tous les modes de réalisation, en position de libération, l'organe de blocage est disposé hors du volume occupé par la bague 28 de la configuration accouplée à la configuration désaccouplée, ainsi que de la configuration désaccouplée à la configuration accouplée. Ainsi en position de libération, l'organe de blocage n'interfère pas avec le déplacement angulaire de la bague 28 par rapport au corps femelle dans le sens de désaccouplement et dans le sens d'accouplement. En configuration désaccouplée, l'organe de blocage n'empêche pas la rotation de la bague 28 par rapport au corps femelle 18 autour de l'axe central longitudinal X18 dans le sens d'accouplement.

Les caractéristiques des modes de réalisation et variantes décrits ci-dessus peuvent être combinées pour former de nouveaux modes de réalisation dans le cadre des revendications.

## Revendications

1. Raccord fluidique (R) comprenant un élément mâle et un élément femelle aptes à s'emmancher l'un avec l'autre selon un axe central longitudinal (X2, X18) du raccord, l'élément mâle (A) ayant un corps mâle (2) formant au moins une rainure d'accouplement (64), cette rainure d'accouplement comprenant une portion d'entrée longitudinale (640) qui débouche sur un côté avant de l'élément mâle (A), et une portion circonférentielle (642), l'élément femelle (B) comprenant :
- un corps femelle (18) formant un volume d'accueil (V22) du corps mâle (2), et comprenant au moins un pion d'accouplement (36) s'étendant dans le volume d'accueil (V22), et apte à coopérer avec la portion circonférentielle (642) de la rainure d'accouplement dans une configuration accouplée du raccord, le corps femelle (18) comprenant également au moins une rainure de guidage (43) comprenant une portion inclinée (432) par rapport à une direction circonférentielle et par rapport à une direction longitudinale,
- un piston (32) comprenant au moins un pion de guidage (332) faisant saillie radialement du piston, le pion de guidage (332) étant engagé dans la rainure de guidage (43),
- une bague (28) interposée radialement entre le piston (32) et le corps femelle (18) et délimitant un canal interne (V28) de l'élément femelle (B), le piston (32) étant bloqué en rotation par rapport à la bague (28) mais monté avec possibilité de coulissement longitudinal par rapport à la bague (28) entre une position de fermeture du canal interne (V28), dans laquelle le piston (32) et la bague (28) coopèrent de manière étanche, et une position d'ouverture du canal interne (V28),
le raccord comprenant un joint d'étanchéité (16) interposé radialement entre la bague (28) et le corps mâle (2) dans la configuration accouplée du raccord,
entre une configuration désaccouplée du raccord et la configuration accouplée, la bague (28) est déplacée en rotation par rapport au corps femelle (18) autour de l'axe longitudinal (X2, X18) du raccord selon un sens d'accouplement (F1) et la bague (28) est maintenue longitudinalement dans le corps femelle (18), et le piston (32) est déplacé longitudinalement de sa position de fermeture à sa position d'ouverture, ce raccord est **caractérisé en ce que** le corps mâle (2) comprend un corps externe mâle (6) et un corps interne mâle (4), le corps interne mâle (4) délimitant un conduit interne (42) de l'élément mâle (A), le corps externe mâle (6) portant la rainure d'accouplement (64),
**en ce que**, en cours d'accouplement, le corps externe mâle (6) et la bague (28) sont solidarisés en rotation autour de l'axe central longitudinal (X18, X2),
**en ce que**, en configuration accouplée, le corps externe mâle (6) et la bague (28) sont solidaires en rotation autour de l'axe central longitudinal (X18, X2),
**en ce que**, pendant l'accouplement et en configuration accouplée, le corps externe mâle (6) et le corps interne mâle (4) sont libres en rotation l'un par rapport à l'autre autour de l'axe longitudinal (X2) mais dépourvus de mobilité en translation l'un par rapport à l'autre le long de l'axe longitudinal (X2),
**en ce que** l'élément femelle (B) comprend au moins un organe de blocage (45; 51) mobile dans le corps femelle, en configuration accouplée du raccord, entre une position de blocage, dans laquelle l'organe de blocage (45; 51) empêche la rotation de la bague (28) par rapport au corps femelle (18) autour de l'axe longitudinal (X18) selon un sens de désaccouplement (F6), et une position de libération, dans laquelle l'organe de blocage (45; 51) n'empêche pas la rotation de la bague (28) selon le sens de désaccouplement, et
**en ce qu'**en configuration désaccouplée, l'organe de blocage (45; 51) n'empêche pas la rotation de la bague (28) selon le sens d'accouplement.

2. Raccord selon la revendication 1, **caractérisé en ce que** la rainure d'accouplement (64) comprend une portion intermédiaire (644) inclinée selon une direction circonférentielle et une direction longitudinale, située entre la portion circonférentielle (642) et la portion d'entrée longitudinale (640) de la rainure d'accouplement (64), **en ce que** la rainure de guidage (43) comprend une portion circonférentielle (430) qui débouche dans la portion inclinée (432) de la rainure de guidage (43) et **en ce que**, en cours d'accouplement, la course angulaire autour de l'axe longitudinal (X2, X18) du pion de guidage (332) dans la portion circonférentielle (430) correspond à la course angulaire autour de l'axe longitudinal (X2, X18) du pion d'accouplement (36) dans la portion intermédiaire inclinée (644) de la rainure d'accouplement (64) et au mouvement de la bague (28) par rapport au corps mâle (2) d'une première position longitudinale, où la bague (28) et le corps mâle (2) ne coopèrent pas de manière étanche, à une deuxième position longitudinale, où la bague (28) et le corps mâle (2) coopèrent de manière étanche par l'intermédiaire du joint d'étanchéité (16).

3. Raccord selon l'une des revendications précédentes, **caractérisé en ce que** le corps mâle (2) comporte au moins une couronne de billes (8) interposées entre le corps interne mâle (4) et le corps externe mâle (6) pour la liberté en rotation relative des corps interne mâle (4) et corps externe mâle (6) autour de l'axe central longitudinal (X2).

4. Raccord selon l'une des revendications précédentes, **caractérisé en ce que** le joint d'étanchéité (16) comporte un corps polymère (160) en forme de U et un renfort (162) monté radialement entre les deux branches (164) de la forme en U, la forme en U étant ouverte vers l'arrière de l'élément de raccord (A, B) parmi l'élément mâle (A) ou femelle (B) dans lequel le joint (16) est logé.

5. Raccord selon l'une des revendications précédentes, **caractérisé en ce que** le pion d'accouplement (36) s'étend en arrière d'une face avant (282) de la bague (28), le pion d'accouplement (36) s'étendant de préférence en retrait de la face avant (282) de la bague (28) d'une distance longitudinale (L2) supérieure à 0,6 fois un diamètre interne (D22) du corps femelle (18) délimitant le volume d'accueil (V22) du corps mâle (2) dans l'élément femelle (B).

6. Raccord selon l'une des revendications précédentes, **caractérisé en ce que** la bague (28) comporte un pion d'entrainement (290) disposé en retrait d'une face avant (282) de la bague (28), ce pion d'entraînement (290) étant engagé dans la rainure d'accouplement (64) pour la solidarisation du corps externe mâle (6) avec la bague (28) en rotation autour de l'axe central longitudinal (X18) en cours d'accouplement et en configuration accouplée, **en ce que** le joint d'étanchéité (16) est logé dans le corps mâle (2) et coopère avec une surface radiale externe (S28) de la bague (28) en configuration accouplée et **en ce qu'**une distance longitudinale (L3) entre le pion d'entraînement (290) et une extrémité avant de la surface radiale externe (S28) de la bague (28) est inférieure à une distance longitudinale (L'1) entre le joint d'étanchéité (16) et une face avant (66) du corps externe mâle (66).

7. Raccord selon l'une des revendications précédentes, **caractérisé en ce qu'**en configuration désaccouplée du raccord, le ou chaque organe de blocage (45; 51) est en position de libération, et **en ce que** la position de libération est une position stable.

8. Raccord selon l'une des revendications précédentes, **caractérisé en ce que** l'organe de blocage (45; 51) est disposé dans une rainure orthoradiale (226; 53) du corps femelle (18), traversant le corps femelle de part en part, et **en ce que** le corps femelle (18) comprend un organe de manœuvre (47; 59) disposé à l'extérieur du corps femelle (18) pour la commande du mouvement de l'organe de blocage (45; 51) de la position de blocage à la position de libération.

9. Raccord selon l'une des revendications précédentes, **caractérisé en ce que** le ou chaque organe de blocage (45; 51) est solidaire du corps femelle (18) en rotation autour de l'axe longitudinal (X18), **en ce que** le ou chaque organe de blocage (45; 51) est en contact, en position de blocage, avec un méplat (286) de la bague (28) qui est ménagé en creux à partir d'une surface radiale externe (S284) de la bague (28), et **en ce qu'**en position de libération, le ou chaque organe de blocage (45; 51) est entièrement disposé à l'extérieur d'un volume cylindrique délimité autour de l'axe longitudinal (X2, X18) par cette surface radiale externe (S284).

10. Raccord selon la revendication 9, **caractérisé en ce que** l'organe de blocage est une tige (45) qui comprend une encoche (450) formée en creux dans une surface externe (452) de la tige (45) et **en ce que** la tige (45) est mobile en rotation par rapport au corps femelle (18), autour d'un axe (Y45) incliné par rapport à une direction longitudinale, entre la position de libération dans laquelle l'encoche (450) est en regard de la bague (28) et n'interfère pas avec la rotation de la bague (28), et la position de blocage, dans laquelle la surface externe (452) de la tige (45) est en contact avec le méplat (286) de la bague (28).

11. Raccord selon l'une des revendications précédentes, **caractérisé en ce que** l'organe de blocage (45) est solidaire d'un organe de manœuvre formé par un levier (47), mobile en rotation par rapport au corps femelle (18) entre la position de libération et la position de blocage de l'organe de blocage (45) et comprenant deux flasques (470) disposés en chape autour du corps femelle (18).

12. Raccord selon la revendication 11, **caractérisé en ce que** le corps femelle (18) forme un épaulement longitudinal externe (202) coopérant avec un épaulement interne (470E) du levier (47) en position de blocage pour freiner le mouvement du levier (47) vers la position de libération de l'organe de blocage (45).

13. Raccord selon l'une des revendications précédentes, **caractérisé en ce que** l'élément mâle (A) comprend une soupape (12) repoussée par un ressort (14) vers une position de fermeture du conduit interne (42) de l'élément mâle (A), **en ce que**, en cours d'accouplement, cette soupape (12) est déplacée par le piston (32) vers une position d'ouverture du conduit interne (42) de l'élément mâle (A), et **en ce qu'**une encoche terminale (434) de la rainure de guidage (43), dans laquelle le pion de guidage (332) est engagé en configuration accouplée, est configurée de manière que le mouvement du piston (32) présente une sur-course longitudinale entre sa position d'ouverture en configuration accouplée et sa position de fermeture.

14. Raccord selon l'une des revendications précédentes, **caractérisé en ce que** le pion de guidage (332) traverse radialement une rainure longitudinale (292) de la bague (28) au niveau de laquelle le pion de guidage (332) et la bague (28) coopèrent pour le coulissement longitudinal de la bague (28) par rapport au piston (32), cette rainure longitudinale (292) débouchant sur l'arrière de la bague (28).

15. Raccord selon l'une des revendications précédentes, **caractérisé en ce que** le corps externe mâle (6) comporte des surfaces radiales internes (67, 69) qui sont étagées, et **en ce que** la bague (28) comporte des surfaces radiales externes (S28, 223) qui sont étagées de manière qu'en cours d'accouplement, les surfaces radiales externes (S28, 223) étagées et les surfaces radiales internes (67, 69) étagées coopèrent deux à deux.

## Patentansprüche

1. Fluidverbindungsstück (R), umfassend ein Steckelement und einem Buchsenelement, die geeignet sind, entlang einer mittleren Längsachse (X2, X18) der Kopplung ineinander zu passen, wobei das Steckelement (A) einen Steckkörper (2) aufweist, der mindestens eine Kopplungsnut (64) bildet, diese Kopplungsnut umfassend einen Längseintrittsabschnitt (640), der an einer Vorderseite des Steckelements (A) mündet, und einen Umfangsabschnitt (642), das Buchsenelement (B) umfassend:
- einen Buchsenkörper (18), der ein Aufnahmevolumen (V22) des Steckkörpers (2) bildet und mindestens einen Kopplungsstift (36) umfasst, der sich in das Aufnahmevolumen (V22) erstreckt und geeignet ist, um in einer gekoppelten Konfiguration des Verbindungsstücks mit dem Umfangsabschnitt (642) der Kopplungsnut zusammenzuwirken, der Buchsenkörper (18) auch mindestens eine Führungsnut (43) umfasst, umfassend einen geneigten Abschnitt (432) in Bezug auf eine Umfangsrichtung und in Bezug auf eine Längsrichtung,
- einen Kolben (32), umfassend mindestens einen Führungsstift (332), der radial vom Kolben hervorsteht, wobei der Führungsstift (332) in die Führungsnut (43) eingreift,
- einen Ring (28), der radial zwischen dem Kolben (32) und dem Buchsenkörper (18) angeordnet ist und einen inneren Kanal (V28) des Buchsenelements (B) begrenzt, wobei der Kolben (32) in Bezug auf den Ring (28) gegen Drehung blockiert ist, jedoch in Bezug auf den Ring (28) zwischen einer Schließstellung des inneren Kanals (V28), in der der Kolben (32) und der Ring (28) dicht zusammenwirken, und einer Öffnungsstellung des inneren Kanals (V28) längsverschiebbar montiert ist,
das Verbindungsstück umfassend eine Dichtung (16), die in der gekoppelten Konfiguration des Verbindungsstücks radial zwischen dem Ring (28) und dem Steckkörper (2) angeordnet ist,
zwischen einer entkoppelten Konfiguration der Kopplung und der gekoppelten Konfiguration der Ring (28) in Bezug auf den Buchsenkörper (18) um die Längsachse (X2, X18) der Kopplung in einer Kopplungsrichtung (F1) gedreht wird und der Ring (28) in Längsrichtung in dem Buchsenkörper (18) gehalten wird, und der Kolben (32) in Längsrichtung von seiner Schließstellung in seine Öffnungsstellung bewegt wird, wobei diese Kopplung **dadurch gekennzeichnet ist, dass** der Steckkörper (2) einen äußeren Steckkörper (6) und einen inneren Steckkörper (4) umfasst, wobei der innere Steckkörper (4) einen inneren Kanal (42) des Steckelements (A) begrenzt, wobei der äußere Steckkörper (6) die Kopplungsnut (64) trägt,
dass während des Koppelns der äußere Steckkörper (6) und der Ring (28) fest miteinander verbunden werden, um sich um die mittlere Längsachse (X18, X2) zu drehen,
dass in der gekoppelten Konfiguration der äußere Steckkörper (6) und der Ring (28) um die mittlere Längsachse (X18, X2) drehfest miteinander verbunden sind,
dass während des Koppelns und in der gekoppelten Konfiguration der äußere Steckkörper (6) und der innere Steckkörper (4) in Bezug aufeinander um die Längsachse (X2) frei drehbar sind, aber keine Translationsbeweglichkeit in Bezug aufeinander entlang der Längsachse (X2) aufweisen,
dass das Buchsenelement (B) mindestens ein Arretierorgan (45; 51) umfasst, das in dem Buchsenkörper in der gekoppelten Konfiguration der Kopplung zwischen einer Arretierposition, in der das Arretierorgan (45; 51) die Drehung des Rings (28) in Bezug auf den Buchsenkörper (18) um die Längsachse (X18) in einer Entkopplungsrichtung (F6) verhindert, und einer Freigabeposition, in der das Arretierorgan (45; 51) die Drehung des Rings (28) in der Entkopplungsrichtung nicht verhindert, und
dass das Arretierorgan (45; 51) in der entkoppelten Konfiguration die Drehung des Rings (28) in der Kopplungsrichtung nicht verhindert.

2. Kopplung nach Anspruch 1, **dadurch gekennzeichnet, dass** die Kopplungsnut (64) einen Zwischenabschnitt (644) umfasst, der in einer Umfangsrichtung und einer Längsrichtung geneigt ist und sich zwischen dem Umfangsabschnitt (642) und dem Längseintrittsabschnitt (640) der Kopplungsnut (64) befindet, dass die Führungsnut (43) einen Umfangsabschnitt (430) umfasst, der in den geneigten Abschnitt (432) der Führungsnut (43) mündet, und dass während des Koppelns der Winkelhub um die Längsachse (X2, X18) des Führungsstifts (332) in dem Umfangsabschnitt (430) dem Winkelhub um die Längsachse (X2, X18) des Kopplungsstifts (36) in dem geneigten Zwischenabschnitt (644) der Kopplungsnut (64) und der Bewegung des Rings (28) in Bezug auf den Steckkörper (2) von einer ersten Längsposition entspricht, in der der Ring (28) und der Steckkörper (2) nicht abdichtend zusammenwirken, zu einer zweiten Längsposition, in der der Ring (28) und der Steckkörper (2) über die Dichtung (16) abdichtend zusammenwirken.

3. Verbindungsstück nach einem der vorherigen Ansprüche, **dadurch gekennzeichnet, dass** der Steckkörper (2) mindestens einen Kugelkranz (8) umfasst, der zwischen dem inneren Steckkörper (4) und dem äußeren Steckkörper (6) für die relative Drehfreiheit des inneren Steckkörpers (4) und des äußeren Steckkörpers (6) um die mittlere Längsachse (X2) eingefügt ist.

4. Verbindungsstück nach einem der vorherigen Ansprüche, **dadurch gekennzeichnet, dass** die Dichtung (16) einen U-förmigen Polymerkörper (160) und eine Verstärkung (162) umfasst, die radial zwischen den zwei Schenkeln (164) der U-Form montiert ist, wobei die U-Form zur Rückseite des Verbindungsstücks (A, B) unter dem Steck- (A) oder Buchsenelement (B), in dem die Dichtung (16) aufgenommen ist, offen ist.

5. Verbindungsstück nach einem der vorherigen Ansprüche, **dadurch gekennzeichnet, dass** sich der Kopplungsstift (36) von einer Vorderseite (282) des Rings (28) zurückversetzt erstreckt, wobei sich der Kopplungsstift (36) vorzugsweise von der Vorderseite (282) des Rings (28) um einen Längsabstand (L2) zurückversetzt erstreckt, der größer ist als das 0,6-fache eines Innendurchmessers (D22) des Buchsenkörpers (18), der das Aufnahmevolumen (V22) des Steckkörpers (2) in dem Buchsenelement (B) begrenzt.

6. Verbindungsstück nach einem der vorherigen Ansprüche, **dadurch gekennzeichnet, dass** der Ring (28) einen Mitnehmerstift (290) umfasst, der von einer Vorderseite (282) des Rings (28) zurückversetzt angeordnet ist, wobei dieser Mitnehmerstift (290) zur festen Verbindung des äußeren Steckkörpers (6) mit dem Ring (28) bei Drehung um die mittlere Längsachse (X18) während der Kopplung und in gekuppelter Konfiguration in die Kopplungsnut (64) eingreift, dass die Dichtung (16) in dem Steckkörper (2) aufgenommen ist und mit einer radialen Außenfläche (S28) des Rings (28) in der gekoppelten Konfiguration zusammenwirkt und dass ein Längsabstand (L3) zwischen dem Mitnehmerstift (290) und einem vorderen Ende der radialen Außenfläche (S28) des Rings (28) kleiner ist als ein Längsabstand (L'1) zwischen der Dichtung (16) und einer Vorderseite (66) des äußeren Steckkörpers (66).

7. Verbindungsstück nach einem der vorherigen Ansprüche, **dadurch gekennzeichnet, dass** in einer von dem Verbindungsstück entkoppelten Konfiguration das oder jedes Arretierorgan (45; 51) in einer Freigabeposition ist, und dass die Freigabeposition eine stabile Position ist.

8. Verbindungsstück nach einem der vorherigen Ansprüche, **dadurch gekennzeichnet, dass** das Arretierorgan (45; 51) in einer orthoradialen Nut (226; 53) des Buchsenkörpers (18) angeordnet ist, die den Buchsenkörper durchdringt, und dass der Buchsenkörper (18) ein Betätigungselement (47; 59) umfasst, das außerhalb des Buchsenkörpers (18) angeordnet ist, um die Bewegung des Arretierorgans (45; 51) von der Arretierposition in die Freigabeposition zu steuern.

9. Verbindungsstück nach einem der vorherigen Ansprüche, **dadurch gekennzeichnet, dass** das oder jedes Arretierorgan (45; 51) mit dem Buchsenkörper (18) in Drehung um die Längsachse (X18) fest verbunden ist, dass das oder jedes Arretierorgan (45; 51) in der Arretierposition mit einer Abflachung (286) des Rings (28) in Kontakt ist, die ausgehend von einer radialen Außenfläche (S284) des Rings (28) vertieft ausgebildet ist, und dass das oder jedes Arretierorgan (45; 51) in der Freigabeposition vollständig außerhalb eines zylindrischen Volumens angeordnet ist, das um die Längsachse (X2, X18) durch diese radiale Außenfläche (S284) begrenzt wird.

10. Verbindungsstück nach Anspruch 9, **dadurch gekennzeichnet, dass** das Arretierorgan eine Stange (45) ist, die eine Kerbe (450) umfasst, die in einer Außenfläche (452) der Stange (45) vertieft gebildet ist, und dass die Stange (45) in Bezug auf den Buchsenkörper (18) um eine Achse (Y45), die in Bezug auf eine Längsrichtung geneigt ist, zwischen der Freigabeposition, in der die Kerbe (450) dem Ring (28) gegenüberliegt und die Drehung des Rings (28) nicht beeinträchtigt, und der Arretierposition, in der die Außenfläche (452) der Stange (45) die Abflachung (286) des Rings (28) berührt, drehbar beweglich ist.

11. Verbindungsstück nach einem der vorherigen Ansprüche, **dadurch gekennzeichnet, dass** das Arretierorgan (45) fest mit einem Betätigungsorgan verbunden ist, das von einem Hebel (47) gebildet ist, der in Bezug auf den Buchsenkörper (18) zwischen der Freigabeposition und der Arretierposition des Arretierorgans (45) drehbar beweglich ist und zwei Flansche (470) umfasst, die gabelförmig um den Buchsenkörper (18) angeordnet sind.

12. Verbindungsstück nach Anspruch 11, **dadurch gekennzeichnet, dass** der Buchsenkörper (18) eine äußere Längsschulter (202) bildet, die mit einer inneren Schulter (470E) des Hebels (47) in der Blockierstellung zusammenwirkt, um die Bewegung des Hebels (47) in Richtung der Freigabeposition des Arretierorgans (45) zu bremsen.

13. Verbindungsstück nach einem der vorherigen Ansprüche, **dadurch gekennzeichnet, dass** das Steckelement (A) ein Ventil (12) umfasst, das durch eine Feder (14) in eine Position gedrückt wird, in der der innere Kanal (42) des Steckelements (A) geschlossen ist, dass dieses Ventil (12) während des Koppelns durch den Kolben (32) in eine Position bewegt wird, in der der innere Kanal (42) des Steckelements (A) geöffnet ist, und dass eine Endkerbe (434) der Führungsnut (43), in die der Führungsstift (332) in der gekoppelten Konfiguration eingreift, konfiguriert ist, sodass die Bewegung des Kolbens (32) einen Längsüberhub zwischen seiner Öffnungsposition in der gekoppelten Konfiguration und seiner Schließposition aufweist.

14. Verbindungsstück nach einem der vorherigen Ansprüche, **dadurch gekennzeichnet, dass** der Führungsstift (332) radial durch eine Längsnut (292) des Rings (28) verläuft, an der der Führungsstift (332) und der Ring (28) für die Längsverschiebung des Rings (28) in Bezug auf den Kolben (32) zusammenwirken, wobei diese Längsnut (292) an der Rückseite des Rings (28) mündet.

15. Verbindungsstück nach einem der vorherigen Ansprüche, **dadurch gekennzeichnet, dass** der äußere Steckkörper (6) innere radiale Oberflächen (67, 69) aufweist, die abgestuft sind, und dass der Ring (28) äußere radiale Oberflächen (S28, 223) aufweist, die abgestuft sind, sodass während des Koppelns die abgestuften äußeren radialen Oberflächen (S28, 223) und die abgestuften inneren radialen Oberflächen (67, 69) paarweise zusammenwirken.

## Claims

1. A fluid coupling (R) comprising a male element and a female element capable of being fitted together according to a central longitudinal axis (X2, X18) of the coupling, the male element (A) having a male body (2) forming at least one connecting groove (64), said connecting groove comprising a longitudinal inlet portion (640) which opens on a front face of the male element (A), and a circumferential portion (642), the female element (B) comprising :
- a female body (18) forming a receiving volume (V22) of the male body (2), and comprising at least one connecting pin (36) extending into the receiving volume (V22), and able to engage with the circumferential portion (642) of the connecting groove in a connected configuration of the coupling, the female body (18) also comprising at least one guide groove (43) comprising an inclined portion (432) with respect to a circumferential direction and with respect to a longitudinal direction,
- a piston (32) comprising at least one guide pin (332) radially projecting from the piston, the guide pin (332) being engaged in the guide groove (43),
- a ring (28) radially interposed between the piston (32) and the female body (18) and delimiting an inner channel (V28) of the female element (B), the piston (32) being prevented from rotating with respect to the ring (28) but mounted so as to be longitudinally slidable with respect to the ring (28) between a position closing the inner channel (V28), wherein the piston (32) and the ring (28) engage in a sealed manner, and a position opening the inner channel (V28),
the coupling comprises a seal (16) radially interposed between the ring (28) and the male body (2) in the connected configuration of the coupling,
between a disconnected configuration of the coupling and the connected configuration, the ring (28) is rotated with respect to the female body (18) around the longitudinal axis (X2, X18) of the coupling in a connecting direction (F1) and the ring (28) is held longitudinally in the female body (18), and the piston (32) is moved longitudinally from its closed position to its open position,
this coupling is **characterized in that** the male body (2) comprises an outer male body (6) and an inner male body (4), the inner male body (4) delimiting an inner duct (42) of the male element (A), the outer male body (6) carrying the connecting groove (64),
**in that**, during connecting, the outer male body (6) and the ring (28) are rotationally fixed around the central longitudinal axis (X18, X2),
**in that**, in the connected configuration, the outer male body (6) and the ring (28) are rotationally fixed around the central longitudinal axis (X18, X2),
**in that**, during connecting and in the connected configuration, the outer male body (6) and the inner male body (4) are free to rotate with respect to each other around the longitudinal axis (X2) but are not movable in translation with respect to each other along the longitudinal axis (X2),
**in that** the female element (B) comprises at least one locking device (45; 51) movable in the female body, in the connected configuration of the coupling, between a locking position, wherein the locking device (45; 51) prevents rotation of the ring (28) with respect to the female body (18) around the longitudinal axis (X18) in a disconnecting direction (F6), and a release position, wherein the locking device (45; 51) does not prevent rotation of the ring (28) in the disconnecting direction, and
in the disconnected configuration, the locking device (45; 51) does not prevent the rotation of the ring (28) in the connecting direction.

2. The coupling according to claim 1, **characterized in that** the connecting groove (64) comprises an intermediate portion (644) inclined in a circumferential direction and a longitudinal direction, located between the circumferential portion (642) and the longitudinal entry portion (640) of the connecting groove (64), **in that** the guide groove (43) comprises a circumferential portion (430) which opens into the inclined portion (432) of the guide groove (43), and **in that**, during connecting, the angular stroke around the longitudinal axis (X2, X18) of the guide pin (332) in the circumferential portion (430) corresponds to the angular stroke around the longitudinal axis (X2, X18) of the connecting pin (36) in the inclined intermediate portion (644) of the connecting groove (64) and to the movement of the ring (28) with respect to the male body (2) from a first longitudinal position, where the ring (28) and the male body (2) do not engage in a sealed manner, to a second longitudinal position, where the ring (28) and the male body (2) engage in a sealed manner via the seal (16).

3. The coupling according to any one of the preceding claims, **characterized in that** the male body (2) comprises at least one ring of balls (8) interposed between the inner male body (4) and the outer male body (6) for the relative freedom of rotation of the inner male body (4) and outer male body (6) around the central longitudinal axis (X2).

4. The coupling according to one of the preceding claims, **characterized in that** the seal (16) comprises a U-shaped polymer body (160) and a reinforcement (162) radially mounted between the two legs (164) of the U-shape, the U-shape being open towards the rear of the connecting element (A, B) among the male (A) or female (B) element wherein the seal (16) is housed.

5. The coupling according to one of the preceding claims, **characterized in that** the connecting pin (36) extends behind a front face (282) of the ring (28), the connecting pin (36) preferably extending set back from the front face (282) of the ring (28) by a longitudinal distance (L2) greater than 0.6 times an inner diameter (D22) of the female body (18) delimiting the receiving volume (V22) of the male body (2) in the female element (B).

6. The coupling according to one of the preceding claims, **characterized in that** the ring (28) comprises a drive pin (290) arranged set back from a front face (282) of the ring (28), this drive pin (290) being engaged in the connecting groove (64) for fixing the outer male body (6) to the ring (28) in rotation around the central longitudinal axis (X18) during connecting and in the connected configuration, **in that** the seal (16) is housed in the male body (2) and engages with an outer radial surface (S28) of the ring (28) in a connected configuration and **in that** a longitudinal distance (L3) between the drive pin (290) and a front face of the outer radial surface (S28) of the ring (28) is smaller than a longitudinal distance (L'1) between the seal (16) and a front face (66) of the outer male body (66).

7. The coupling according to one of the above claims, **characterized in that** in the disconnected configuration of the coupling, the or each locking device (45; 51) is in the release position, and **in that** the release position is a stable position.

8. The coupling according to one of the preceding claims, **characterized in that** the locking device (45; 51) is arranged in an orthoradially extending groove (226; 53) of the female body (18), passing through the female body (18), and **in that** the female body (18) comprises an operating device (47; 59) arranged outside the female body (18) for controlling the movement of the locking device (45; 51) from the locking position to the release position.

9. The coupling according to one of the preceding claims, **characterized in that** the or each locking device (45; 51) is integral with the female body (18) in rotation around the longitudinal axis (X18), **in that** the or each locking device (45; 51) is in contact, in the locking position, with a flat (286) of the ring (28) which is recessed from an outer radial surface (S284) of the ring (28), and **in that**, in the release position, the or each locking device (45; 51) is entirely disposed outside a cylindrical volume delimited around the longitudinal axis (X2, X18) by this outer radial surface (S284).

10. The coupling according to the claim 9, **characterized in that** the locking device is a rod (45) which comprises a notch (450) recessed in an outer surface (452) of the rod (45) and **in that** the rod (45) is rotatable with respect to the female body (18) around an axis (Y45) inclined with respect to a longitudinal direction, between the release position, wherein the notch (450) faces the ring (28) and does not interfere with the rotation of the ring (28), and the locking position, wherein the outer surface (452) of the rod (45) is in contact with the flat (286) of the ring (28).

11. The coupling according to one of the preceding claims, **characterized in that** the locking device (45) is integral with an operating device formed by a lever (47), which is rotatable with respect to the female body (18) between the release position and the locking position of the locking device (45) and comprising two flanges (470) arranged in a clevis around the female body (18).

12. The coupling according to the claim 11, **characterized in that** the female body (18) forms an outer longitudinal shoulder (202) engaging with an inner shoulder (470E) of the lever (47) in the locking position to slow down the movement of the lever (47) towards the release position of the locking device (45).

13. The coupling according to one of the preceding claims, **characterized in that** the male element (A) comprises a valve (12) pushed back by a spring (14) towards a position closing the inner duct (42) of the male element (A), **in that**, during connecting, this valve (12) is moved by the piston (32) towards a position opening the inner duct (42) of the male element (A), and **in that** a terminal notch (434) of the guide groove (43), wherein the guide pin (332) is engaged in the connected configuration, is configured such that the movement of the piston (32) has a longitudinal overtravel between its open position in the connected configuration and its closed position.

14. The coupling according to one of the preceding claims, **characterized in that** the guide pin (332) radially passes through a longitudinal groove (292) of the ring (28) wherein the guide pin (332) and the ring (28) engage for longitudinal sliding of the ring (28) with respect to the piston (32), this longitudinal groove (292) opening out at the rear of the ring (28).

15. The coupling according to one of the preceding claims, **characterized in that** the male outer body (6) comprises inner radial surfaces (67, 69) which are stepped, and **in that** the ring (28) comprises outer radial surfaces (S28, 223) which are stepped in such a way that during connecting the stepped outer radial surfaces (S28, 223) and the stepped inner radial surfaces (67, 69) engage in pairs.
